# EUROPEAN PATENT APPLICATION

(11) **EP 4 442 173 A1**
(43) Date of publication of application: **09.10.2024**
(21) Application number: 21966508.0
(22) Date of filing: 13.12.2021
(51) Int. Cl.: A47J 31/06, A47J 31/46, A47J 31/10, A47J 31/44

(54) **COFFEE MAKER**

(30) Priority: 03.12.2021 KR 20210171542
(71) Applicant: LG Electronics Inc., Yeongdeungpo-gu Seoul 07336 (KR)
(72) Inventor: NAM, Hyeunsik, Seoul 08592 (KR); YANG, Jungkeun, Seoul 08592 (KR); CHOI, Seung-Yeon, Seoul 08592 (KR)
(74) Representative: Vossius & Partner Patentanwälte Rechtsanwälte mbB
(86) International application number: PCT/KR2021/018840
(87) International publication number: WO 2023/101082

(57) **Abstract**

A coffee maker is disclosed. The disclosed coffee maker can separate, by means of an inner partition wall, a first inner space of a case module through which water flows for extraction of coffee and a second inner space of the case module in which a circuit board is installed. In addition, a heating module may be disposed at the upper portion of the second inner space, a suction hole for introducing air may be formed at the lower portion of the case module, and a discharge hole for discharging air may be formed at the upper portion of the case module.

## Description

### [Technical Field]

The disclosure relates to a coffee maker that extracts coffee from coffee beans or coffee powder.

### [Background Art]

Recently, many consumers are making and drinking coffee directly at home or work in various ways.

Among the methods of producing coffee, a hand drip method is a method of placing roasted coffee powder in a dripper equipped with a filter, pouring water into the coffee powder, and extracting the coffee through the bottom of the dripper where extraction holes are formed. The hand drip method includes a pre-wetting process and a coffee extraction process.

The pre-wetting process is also called blooming, pre-infusion, etc., and is a process of pouring a small amount of water into the coffee powder and waiting for a certain period of time before performing the coffee extraction process. Through the pre-wetting process, water is uniformly spread in the coffee powder in advance, and the carbon gas contained in the coffee powder is discharged. The coffee extraction process involves pouring a large amount of water into coffee powder to extract coffee. Then, during the pre-wetting process and coffee extraction process, the user pours water into the coffee powder in a concentric circle or spiral shape.

A coffee maker has been developed that extracts coffee in a manner similar to the hand drip method. The coffee maker includes a water tank module, dripper module, and water outlet module. The water tank module stores water and has a heating part that heats the water. The heated water is supplied to the dripper module through the water outlet module, and water is supplied to the coffee powder received in the dripper module to extract coffee.

A circuit board is provided in the coffee maker to control the water heating operation of the water tank module and the water supply operation of the water outlet module. In this case, the temperature of the circuit board increases due to the water heating operation, and if the temperature becomes too high, the coffee maker breaks down or operates abnormally. Therefore, the heating part and circuit board must be cooled.

In addition, the water stored in the water tank module is discharged to the water outlet module through pipes. In this case, water may leak if the pipes are damaged or the pipes are not properly connected to other pipes. If leaked water comes into contact with the circuit board 80, a safety accident may occur.

Accordingly, heat dissipation and waterproofing problems for coffee makers are emerging.

As a conventional art related to this, Republic of Korea Registered Patent No. 10-2067273 was disclosed.

The conventional art relates to a water purifier, which uses an induction heating module to provide potable hot water, and a printed circuit board that controls the induction heating module is provided in the water purifier. In this case, the conventional art cools the induction heating module using a water cooling method and cools the printed circuit board using a control module cover.

However, since the printed circuit board is installed adjacent to a hot water tank through which water flows, there is a problem in that the printed circuit board cannot be protected from water in the event of a water leak. In addition, due to the structure of the coffee maker, the heating part must be cooled using an air-cooled cooling method, so a water-cooled cooling method cannot be applied to the coffee maker.

### [DISCLOSURE]

### [Technical Problem]

An object of the disclosure is to provide a coffee maker capable of protecting a circuit board from water.

In addition, an object of the disclosure is to provide a coffee maker that can cool both a heating module and a circuit board by air cooling.

In addition, an object of the disclosure is to provide a coffee maker in which malfunctions or abnormal operations can be prevented in advance.

The objects of the disclosure are not limited to the objects mentioned above, and other objects and advantages of the disclosure that are not mentioned may be understood through the following description, and may be understood more clearly by the embodiments of the disclosure.

### [Technical Solution]

A coffee maker according to an embodiment of the disclosure may separate a first internal space of a case module through which water flows for discharging coffee and a second internal space of the case module where a circuit board is installed by an internal partition.

Specifically, a coffee maker according to an embodiment of the disclosure may be configured to include a case module, an outer case, and an inner case inserted into the outer case, and constitute the inner case to include an internal partition. Accordingly, even if water leaks from the first internal space, the leaked water may not flow into the second internal space.

In addition, a coffee maker according to an embodiment of the disclosure may dispose a heating module on an upper portion of the second internal space, form a suction hole for introducing air into a lower portion of the case module, and form a discharge hole for discharging the air into the upper portion of the case module. Accordingly, the air flowing in from the suction hole may naturally move from the lower portion of the second internal space to the upper portion of the second internal space and be discharged.

In addition, a coffee maker according to an embodiment of the disclosure may be installed with an air guide that guides the flow of air flowing into the second internal space. Accordingly, air may flow in the entire area of the second internal space and be discharged into the discharge hole.

In addition, a coffee maker according to an embodiment of the disclosure may comprise a dripper module that extracts coffee from coffee powder, a water tank module that stores water and heats the water, a water outlet module that supplies the stored water to the dripper module, a circuit board that controls the operation of at least one module of the dripper module, water outlet module, and water tank module, and a case module that includes an outer case and an inner case inserted into the outer case, and provides an installation space for the dripper module, water outlet module, water tank module, and the circuit board. In this case, the internal space of the outer case includes a first internal space and a second internal space, the first internal space and second internal space are separated by the inner case, and the stored water is delivered from the first internal space to the water outlet module, and the circuit board may be disposed in the second internal space.

In addition, a coffee maker according to another embodiment of the disclosure may comprise a dripper module that extracts coffee from coffee powder, a water outlet module that supplies water to the dripper module, a water tank module that stores the water and heats the water, a circuit board that controls the operation of at least one module of the dripper module, water outlet module, and water tank module, and a case module that provides an installation space for the dripper module, water outlet module, water tank module, and circuit board. In this case, an internal space in which the circuit board is installed may be formed at a rear side of the case module, the water tank module may be disposed above the internal space, a suction hole may be formed in a lower portion of a rear surface of the case module to introduce external air into the internal space, and a discharge hole may be formed in an upper portion of the rear surface of the case module to discharge air in the internal space to the outside. In addition, according to the water heating operation of the water tank module, an upper temperature of the internal space is higher than a lower temperature of the internal space, and the introduced air may be moved upwardly from the internal space due to a difference between the upper and lower temperatures of the internal space.

### [Advantageous Effect]

According to the disclosure, water leaking into a water flow space (first internal space) does not flow into a circuit board installation space (second internal space), thereby fundamentally preventing water from coming into contact with the circuit board. Accordingly, electrical safety accidents can be prevented in advance.

In addition, according to the disclosure, the air flowing in from the suction hole naturally moves from the lower portion of the second internal space to the upper portion of the second internal space and is discharged, so that the air can flow efficiently and the cooling performance of the circuit board and heating module may be improved.

In addition, according to the disclosure, air may flow in the entire area of the second internal space through the installation of an air guide, and the cooling performance of the circuit board and heating module may be further improved.

In addition to the above-described effects, specific effects of the disclosure are described below while explaining specific details for implementing the disclosure.

### [Description of Drawings]

FIG. 1 is a diagram illustrating a perspective view of a coffee maker according to an embodiment of the disclosure.
FIG. 2 is a diagram illustrating a side view of a coffee maker according to an embodiment of the disclosure.
FIG. 3 is a diagram illustrating a perspective view of a coffee maker with some of a case module omitted, according to an embodiment of the disclosure.
FIG. 4 is a diagram illustrating a cross-sectional perspective view of a coffee maker according to an embodiment of the disclosure.
FIG. 5 is a diagram illustrating a side cross-sectional view of a coffee maker according to an embodiment of the disclosure.
FIG. 6 is a diagram illustrating a front perspective view of a water outlet module according to an embodiment of the disclosure.
FIG. 7 is a diagram illustrating a rear perspective view of the water outlet module with some components omitted, according to an embodiment of the disclosure.
FIG. 8 is a diagram illustrating an exploded perspective view of a water outlet module according to an embodiment of the disclosure.
FIG. 9 is a diagram illustrating a perspective view in which a first part of a dripper module is detached from a second part of the dripper module, according to an embodiment of the disclosure.
FIG. 10 is a diagram illustrating a perspective view in which a first part of a dripper module is mounted on a second part of the dripper module, according to an embodiment of the disclosure.
FIG. 11 is a diagram illustrating an exploded perspective view of a dripper module according to an embodiment of the disclosure.
FIG. 12 is a diagram illustrating a cross-sectional perspective view of FIG. 10.
FIG. 13 is a diagram illustrating a perspective view of a case module according to an embodiment of the disclosure.
FIG. 14 is a diagram illustrating an exploded perspective view of a case module according to an embodiment of the disclosure.
FIG. 15 is a diagram illustrating a perspective view of an outer case viewed from another direction, according to an embodiment of the disclosure.
FIG. 16 is a diagram illustrating a front view of an outer case according to an embodiment of the disclosure.
FIG. 17 is a diagram illustrating a rear view of an outer case according to an embodiment of the disclosure.
FIG. 18 is a diagram illustrating a perspective view of an inner case viewed from another direction, according to an embodiment of the disclosure.
FIG. 19 is a diagram illustrating a side view of an inner case according to an embodiment of the disclosure.
FIG. 20 is a diagram illustrating a perspective view in which an outer case and inner case are coupled, according to an embodiment of the disclosure.
FIG. 21 is a diagram illustrating a perspective view of a front case viewed from another direction, according to an embodiment of the disclosure.
FIG. 22 is a diagram illustrating a side view of a front case according to an embodiment of the disclosure.
FIG. 23 is a diagram illustrating a side view of a front case coupled with an inner case, according to an embodiment of the disclosure.
FIG. 24 is a diagram for explaining a waterproof structure of a coffee maker according to an embodiment of the disclosure.
FIGS. 25 to 29 are diagrams for explaining a heat dissipation structure of a coffee maker according to an embodiment of the disclosure.

### [Mode for Invention]

The above-described objectives, features and advantages are specifically described with reference to the attached drawings hereunder such that one having ordinary skill in the art to which the disclosure pertains may easily implement the technical spirit of the disclosure. In describing the disclosure, detailed description of known technologies in relation to the disclosure is omitted if it is deemed to make the gist of the disclosure unnecessarily vague. Below, preferred embodiments of the disclosure are specifically described with reference to the attached drawings. Throughout the drawings, identical reference numerals denote identical or similar components.

It will be understood that, although the terms first, second, and other terms may be used herein to describe various components, these components should not be limited by these terms. These terms are only used to distinguish one component from another, and a first component may be a second component unless stated to the contrary.

Throughout the disclosure, each component may be provided as a single one or a plurality of ones, unless explicitly stated to the contrary.

As used herein, singular expressions include plural expressions, unless the context clearly indicates otherwise. It should be further understood that the terms "comprise" or "have" and the like, set forth herein, are not interpreted as necessarily including all the stated components or steps but may be interpreted as excluding some of the stated components or steps or may be interpreted as including additional components or steps.

Throughout the specification, unless otherwise stated, "A and/or B" means A, B or A and B. Unless otherwise stated, "C to D" means "C or more and D or less".

Throughout the specification, "upward-downward direction" means the upward-downward direction of the coffee maker in a state in which the coffee maker is installed for daily use. "Leftward-rightward direction" means a direction perpendicular to the upward-downward direction, and frontward-rearward direction means a direction perpendicular to both the upward-downward direction and the leftward-rightward direction. "Bilateral direction" or "lateral direction" has the same meaning as leftward-rightward direction, and these terms may be used interchangeably in the specification.

In the specification, whole beans should be understood to include roasted coffee beans, not coffee beans harvested from coffee trees. There may be several types of roasted coffee beans depending on the degree of roasting. For example, dark roasted coffee may dissolve its coffee components in water more easily than light roasted coffee. However, in the specification, coffee beans are used to mean roasted coffee beans to be used for coffee extraction regardless of the degree of roasting.

In addition, in the specification, a coffee maker refers to a device that mixes ground coffee, i.e., coffee powder, with water and then dissolves the coffee ingredients in water to extract liquid coffee or coffee liquid. Coffee liquid refers to water containing coffee ingredients extracted from coffee powder. Therefore, in the specification, extracting coffee liquid means dissolving coffee powder in water and extracting water containing coffee components from the coffee powder. Therefore, unless otherwise stated, coffee generally refers to coffee liquid, and coffee beans and coffee powder refer to coffee in solid form.

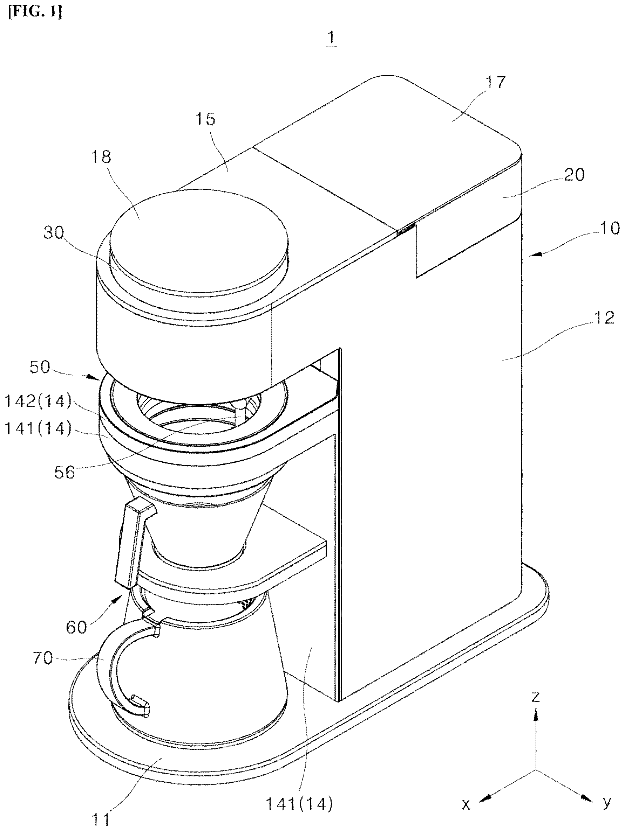

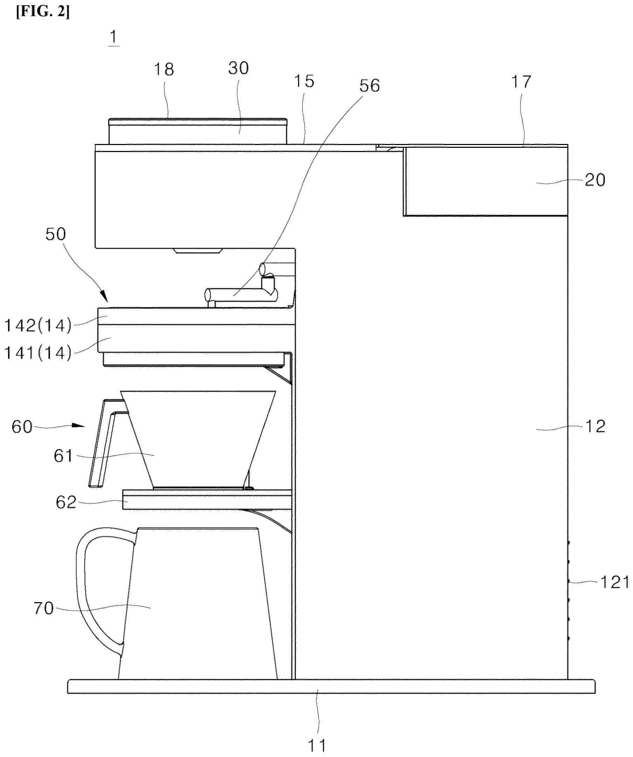

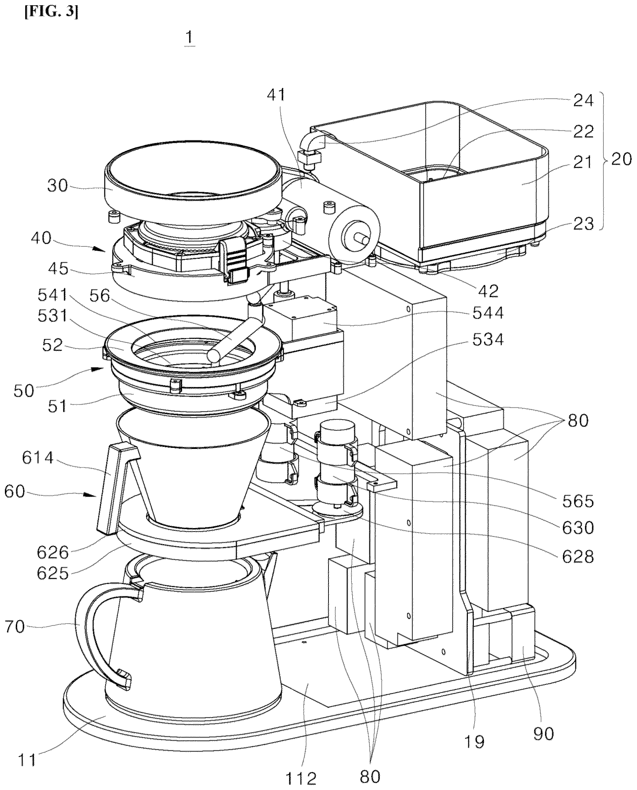

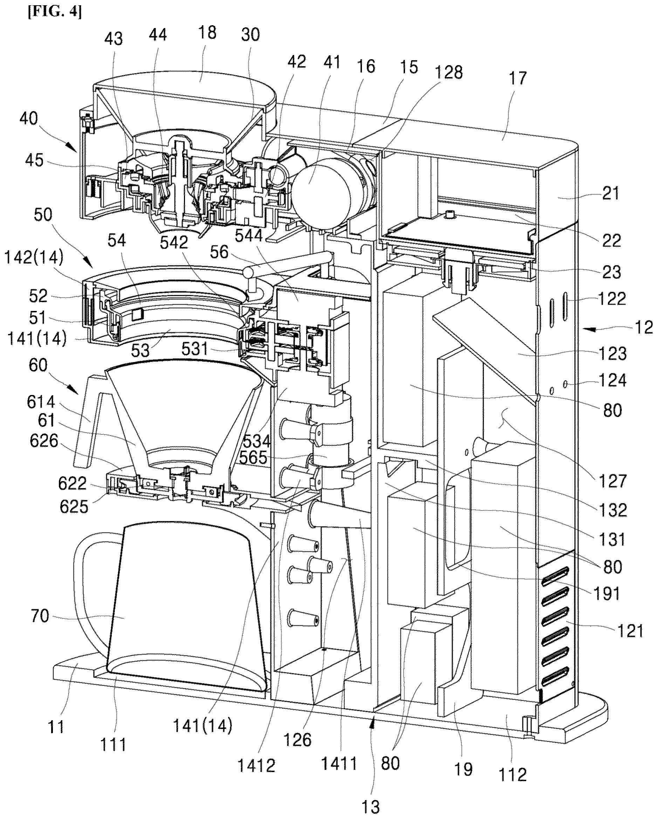

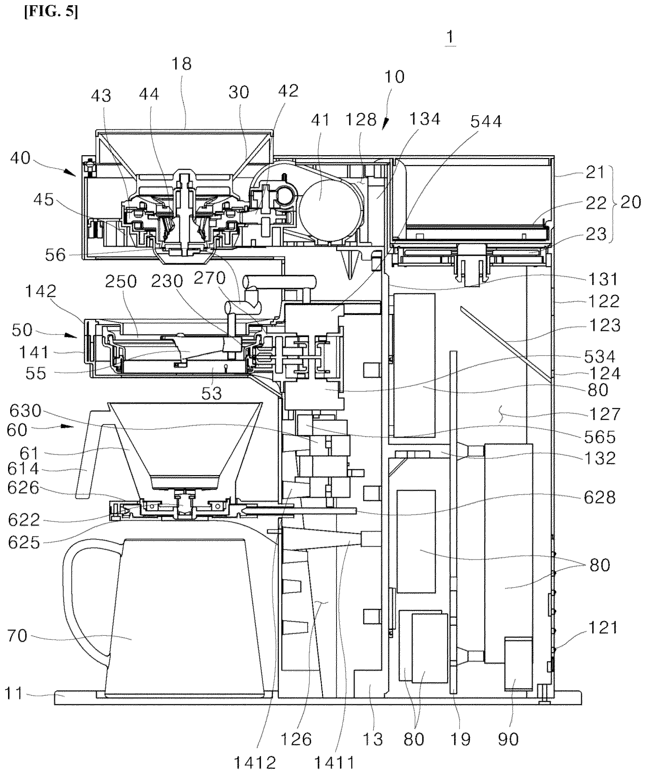

FIG. 1 is a diagram illustrating a perspective view of a coffee maker 1 according to an embodiment of the disclosure. FIG. 2 is a diagram illustrating a side view of the coffee maker 1 according to an embodiment of the disclosure. FIG. 3 is a diagram illustrating a perspective view of the coffee maker 1 with some of the case module 10 omitted, according to an embodiment of the disclosure. FIG. 4 is a diagram illustrating a cross-sectional perspective view of the coffee maker 1 according to an embodiment of the disclosure. FIG. 5 is a diagram illustrating a side cross-sectional view of the coffee maker 1 according to an embodiment of the disclosure.

In the coordinate axes shown in FIG. 1, the x-axis and -x-axis directions are expressed as forward and backward, the y-axis and -y-axis directions are expressed as the right and left, and the z-axis and -z-axis directions are expressed as upward and downward.

Referring to FIGS. 1 to 5, the coffee maker 1 may include a case module 10, a water tank module 20, a hopper 30, a grinder module 40, a water outlet module 50, a dripper module 60, a coffee server 70, and a circuit board 80.

The case 10 may form the exterior of the coffee maker 1. The case 10 may have various shapes.

As an embodiment, the case 10 may include a body case and a base case 11. The body case may include an outer case 12, an inner case 13, a front case 14, a first upper case 15, a second upper case 16, a first cover 17, a second cover 18, and a circuit board supporter 19.

The case body may provide an installation space for the components of the coffee maker 1. The base case 11 may support the case body and coffee server 70 at the bottom. The coffee server 70 may be seated in the first installation groove 111 of the base case 11, and the case body may be installed in the second installation groove 112 of the base case 11.

The outer case 12 may form the actual exterior of the coffee maker 1 and may have empty internal spaces 126, 127, and 128. In the inner spaces 126, 127, and 128 of the outer case 12, the hopper 30, the grinder module 40, a first part of the water outlet module 50, a first part of the dripper module 60, and the circuit board 80, and a blowing fan 90 may be installed. The water tank module 20 may be installed above the rear side of the outer case 12.

The internal spaces 126, 127, and 128 may include a first internal space 126, a second internal space 127, and a third internal space 128. The first part of the water outlet module 50 and first part of the dripper module 60 may be installed in the first internal space 126. The circuit board 80 may be installed in the second internal space 127. The hopper 30 and grinder module 40 may be installed in the third internal space 128.

A suction hole 121 and discharge hole 122 may be formed on the rear surface of the outer case 12. The suction hole 121 may be formed in the lower portion of the rear surface of the outer case 12, and may introduce external air into the internal space of the outer case 12, that is, the second internal space 127. External air may cool the circuit board 80 installed in the second internal space 127. The discharge hole 122 may be formed at the top of the rear surface of the outer case 12, and may discharge air from the interior space of the outer case 12, that is, the second internal space 127, to the outside.

An air guide 123 may be formed on the rear surface of the outer case 12. The air guide 123 may be disposed to be inclined in the second internal space 127 and may guide the movement of introduced air. One end of the air guide 123 may be coupled at a first point on the rear surface of the outer case 12. The first point may be a point between the formation point of the suction hole 121 and the formation point of the discharge hole 122.

A drain hole 124 may be formed at a second point on the rear surface of the outer case 12. Here, the second point may be a point located above the first point. The drain hole 124 may be formed to discharge foreign substances such as water located at the upper portion of the air guide 123 to the outside.

The inner case 13 may be disposed inside the front side of the outer case 12. The inner case 13 may have a shape corresponding to the front side of the outer case 12. The inner case 13 may include an internal partition 131 extending upward-downward.

Meanwhile, the water stored in the water tank module 20 is transferred to the water outlet module 50 through a water flow path such as a pipe, and is discharged to the dripper module 60. In this case, if the water flow path is damaged or the sub-water flow path is not properly coupled, water may leak from the water flow path, and the leaked water may fall on the circuit board 80, causing a safety accident. Accordingly, the coffee maker 1 according to this embodiment may separate the interior of the outer case 12 into a first internal space 126 and second internal space 127 by an internal partition wall 131. In this case, the first internal space 126 may correspond to a water flow path area, and the second internal space 127 may correspond to a circuit board arrangement area. A portion of the water outlet module 50 and portion of the dripper module 60 that are not affected by leaked water may be installed in the first internal space 126, and the circuit board 80 affected by leaked water may be installed in the second internal space 127. This will be explained in more detail below.

The inner case 13 may be formed with a connecting member 132 for installing a circuit board support 19. The connecting member 132 may be disposed in the second internal space 127. In addition, a connection pipe 134 connected to the water outlet part 24 of the water tank module 20 may be formed in the inner case 13. A connection pipe 134 may be disposed in the third internal space 128.

The front case 14 may be installed in front of the inner case 13. A portion of the front case 14 may be disposed inside the outer case 12, and the remaining portions of the front case 14 may be disposed outside the outer case 12. The front case 14 may cover the open front surface of the outer case 12. The front case 14 may include a first front case 141 and a second front case 142 located above the first front case 141.

The first upper case 15 and second upper case 16 may cover the open upper surface of the outer case 12.

The first cover 17 may cover the inlet of the water tank module 20 and protect water from the outside. The second cover 18 may cover the inlet of the hopper 30 and protect the coffee beans from the outside.

The circuit board supporter 19 may be disposed in a vertical direction in the inner space of the outer case 12. The circuit board supporter 19 may provide an installation space for the circuit board 80 and support the circuit board 80.

The structure of the case module 10 will be described in more detail below.

The water tank module 20 may receive water and heat the received water. The water tank module 20 may receive water in various ways and heat water.

As an embodiment, the water tank module 20 may include a water tank body 21, a heating plate 22, and a heating module 23.

The water tank body 21 has an empty internal space, and the upper inlet may be opened. As an embodiment, the water tank body 21 may have a rectangular parallelepiped shape with an open top. However, the disclosure is not limited thereto, and the water tank body 21 may have various shapes.

The water may be received in the internal space of the water tank body 21. In this case, the temperature of the water received may be room temperature water. The inlet of the water tank body 21 may be closed by the first cover 17.

The water outlet part 24 may be formed on the front side of the water tank body 21. The water outlet part 24 may discharge the water stored in the water tank body 21. The water outlet part 24 may be connected to the connection pipe 134 formed in the inner case 13.

The heating plate 22 may be installed on the inner lower surface of the water tank body 21. According to another embodiment, the heating plate 22 may be installed on the outer lower surface of the water tank body 21. The heating plate 22 may be made of metal. In case that the water tank body 21 has a rectangular parallelepiped shape, the heating plate 22 may have a rectangular shape. However, the disclosure is not limited thereto.

The heating module 23 may be a device installed to heat the water received in the water tank body 21. As an embodiment, the heating module 23 may heat water using an induction heating (IH) method. To this end, although not shown in the drawing, the heating module 23 may include a working coil, ferrite, aluminum shield, temperature, etc.

According to the induction heating method, high-frequency power of a predetermined size is applied to the working coil to generate a magnetic field around the working coil. Based on the generated magnetic field, an eddy current is generated in an object to be heated, which is made of a metal component, that is, the heating plate 22. Based on the generated eddy current, the object to be heated, that is, water, is heated.

By heating water using induction heating, water may be heated at a high rate, and water may be heated to a desired temperature by controlling the output of the magnetic field. Therefore, according to the user's operation, water of the user's desired temperature may be generated.

Meanwhile, the heating method of the heating module 23 is not limited to the content described above, and various heating methods may be applied to the coffee maker 1.

The hopper 30 may receive coffee beans. The hopper 30 may store a sufficient amount of coffee beans and provide a certain amount of coffee beans to the grinder module 40.

The hopper 30 may have various shapes. As an embodiment, the hopper 30 may generally have a funnel shape.

The grinder module 40 may generate coffee powder by grinding the coffee beans provided by the hopper 30. The grinder module 40 may be disposed below the hopper 30 and above the dripper module 60. The coffee powder generated by the grinder module 40 may be provided to the dripper module 60 by gravity and received inside the dripper module 60.

The grinder module 40 may grind coffee beans according to a preset grinding degree. The grinding degree may correspond to the particle size of the coffee powder. If the grinding degree is high, the particle size of the coffee powder may be small, and if the grinding degree is low, the particle size of the coffee powder may be large. In other words, the grinding degree may have an inverse relationship with the particle size of the coffee powder.

The grinding degree may be set in various ways depending on the coffee recipe. The grinding degree may be set by the user. For example, the coffee maker 1 may implement a plurality of coffee recipes, the user may select one of the plurality of coffee recipes, and the grinding degree may be set based on the selected coffee recipe. Alternatively, the coffee maker 1 may include a sensor (e.g., an image sensor) that detects the particle size of the coffee powder, and the grinding degree may be set based on the detected particle size of the coffee powder. In other words, the grinding degree may be automatically set without user involvement through detection of the particle size of the coffee powder.

In order to grind coffee beans, the grinder modules 40 of various structures may be applied to the coffee maker 1.

According to an embodiment, the grinder module 40 may include a grinding motor 41, a transmission gear 42, a rotator 43, a grinding gear 44, and a support housing 45.

The grinding motor 41 may generate rotational power. The power of the grinding motor 41 may be transmitted to the rotator 43 through the transmission gear 42.

The transmission gear 42 may include a plurality of gears. One gear among the plurality of gears may be connected to the drive shaft of the grinding motor 41. By engaging the respective gears of the plurality of gears, the power of the grinding motor 41 may be transmitted to the rotator 43.

The grinding gear 44 may be installed inside the rotator 43 to grind coffee beans. As the rotator 43 rotates, the grinding gear 44 may also rotate together. Accordingly, the coffee beans discharged to the lower side of the hopper 30 may be ground.

The support housing 45 may support other components of grinder module 40. The rotator 43 may be rotatably fixed inside the support housing 45. In addition, teeth are formed on the outer peripheral surface of the rotator 43, and the transmission gear 42 may rotate by engaging with the outer peripheral surface of the rotator 530. In addition, the support housing 45 may fix the hopper 30.

The water outlet module 50 may supply water to the coffee powder received in the dripper module 60. The water outlet module 50 may be disposed below the grinder module 40 and above the dripper module 60. That is, if the water outlet module 50 is disposed above the grinder module 40, the supply of water may be interrupted by the grinder module 40, so the water outlet module 50 may be disposed between the grinder module 40 and the dripper module 60. In addition, in order to naturally supply water by gravity, the water outlet module 50 may be disposed above the inlet of the dripper module 60.

The water outlet module 50 may supply the water received in the water tank module 20 to the dripper module 60. The water outlet module 50 may supply room temperature water or hot water to the dripper module 60. When the heating module 23 of the water tank module 20 does not operate, the water outlet module 50 may supply room temperature water to the dripper module 60, and thus, coffee may be extracted using the hot brew method. When the heating module 23 of the water tank module 20 operates, the water outlet module 50 may supply hot water to the dripper module 60, and thus coffee may be extracted using the cold brew method.

Similar to the hand drip operation, the water outlet module 50 may discharge water in a spiral shape and supply the water to the coffee powder.

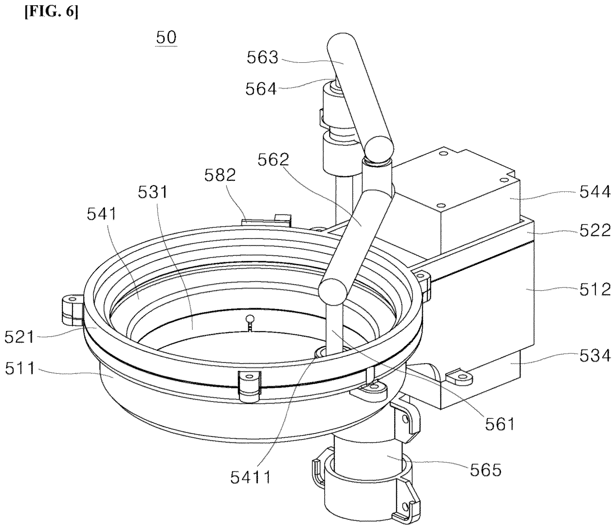

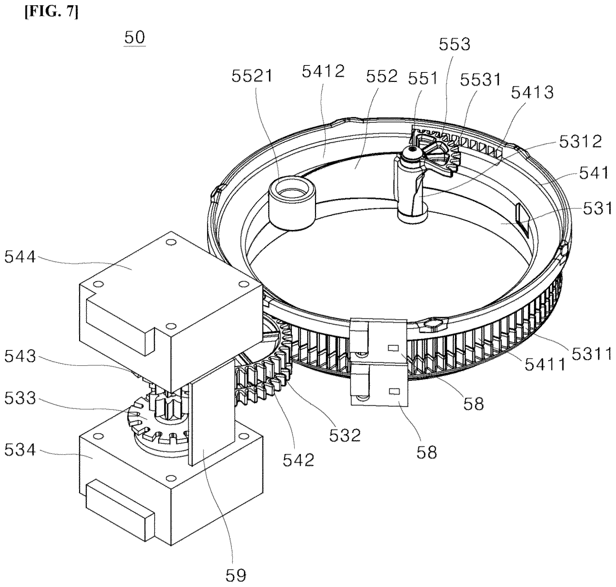

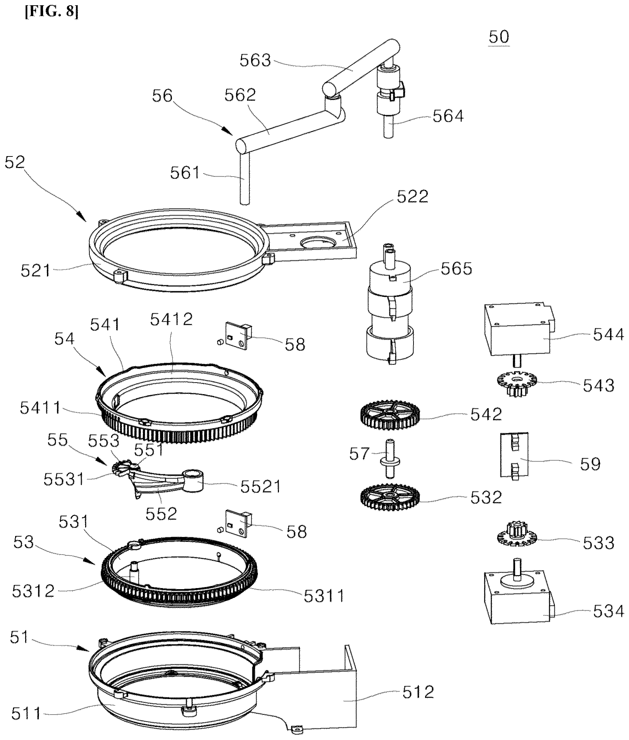

FIG. 6 is a diagram illustrating a front perspective view of the water outlet module 50 according to an embodiment of the disclosure. FIG. 7 is a diagram illustrating a rear perspective view of the water outlet module 50 with some components omitted, according to an embodiment of the disclosure. FIG. 8 is a diagram illustrating an exploded perspective view of the water outlet module 50 according to an embodiment of the disclosure.

Referring to FIGS. 3 to 6, the water outlet module 50 may include a water outlet module housing 51 and 52, a first actuator 53, a second actuator 54, a water outlet nozzle 56, and a water outlet nozzle moving part 55. In addition, various sensors 58 and 59 may be installed in the water outlet module 50 to detect the operations of the first actuator 53 and second actuator 54.

The water outlet module housings 51 and 52 may be configured to include the first water outlet module housing 51 and the second water outlet module housing 52. The first actuator 53 may be configured to include a first ring gear 531, a first idler gear 532, a first driving gear 533, and a first motor 534. The second actuator 54 may be configured to include a second ring gear 541, a second idler gear 542, a second driving gear 543, and a second motor 544. The water outlet nozzle moving part 55 may be configured to include a hinge 551, a first arm 552, and a second arm 553. The water outlet nozzle 56 may be configured to include a nozzle 561, a first pipe 562, a second pipe 563, a third pipe 564, and a water pump 565.

The water outlet module housings 51 and 52 may provide an installation space for the components constituting the water outlet module 50 and protect the components. The water outlet module housings 51 and 52 may include the first water outlet module housing 51 and second water outlet module housing 52 arranged in a stacked manner.

The first part 511 of the first water outlet module housing 51 may have a pillar shape with a penetrated interior. The first and second ring gears 531 and 541 and water outlet nozzle moving part 55 may be installed in the inner space of the first part 511 of the first water outlet module housing 51. A Hall sensor 58 that reacts with the magnet attached to the first and second ring gears 531 and 541 to detect the positions of the first and second ring gears 531 and 541 may be installed on the outer surface of the first part 511 of the first water outlet module housing 51.

The first part 521 of the second water outlet module housing 52 may have a shape with a penetrated interior. The first part 521 of the second water outlet module housing 52 may be coupled to the upper portion of the first part 511 of the first water outlet module housing 51.

The second part 512 of the first water outlet module housing 51 may have a pillar shape with an empty interior. The second part 522 of the second water outlet module housing 52 may be coupled to the upper portion of the second part 512 of the first water outlet module housing 51. The second part 512 of the first water outlet module housing 51 and second part 522 of the second water outlet module housing 52 may provide an installation space of the first idler gear 532, second idler gear 542, first driving gear 533, second driving gear 543, first motor 534, second motor 544, and photo interrupter 59.

The first motor 534 may be installed from the lower side of the second part 512 of the first water outlet module housing 51 through the lower surface of the second part 512 of the first water outlet module housing 51. The second motor 544 may be installed from the upper side of the second part 522 of the second water outlet module housing 52 through the upper surface of the second part 522 of the second water outlet module housing 52.

Meanwhile, the idler gear shaft 57 may be installed to connect the first idler gear 532 and second idler gear 542 in the same axial direction. The photo interrupter 59 may be installed to detect the rotational positions of the first driving gear 533 and second driving gear 543.

The water outlet nozzle 56 may perform the function of supplying water received in the water tank module 20 to the dripper module 60. The water outlet nozzle 56 may include a nozzle 561, a first pipe 562, a second pipe 563, a third pipe 564, and a water pump 565.

The water pump 565 may pump water received in the water tank module 20. The water pump 565 may include an inlet and outlet provided on the upper surface. The inlet of the water pump 565 may be connected to one end of the first pipe (not shown). The outlet of the water pump 565 may be connected to one end of a second pipe (not shown). Meanwhile, the other end of the first pipe may be connected to the connection pipe 134 of the inner case 13, and the other end of the second pipe may be connected to the third pipe 564.

The third pipe 564 may provide water pumped from the outlet of the water pump 565 to the second pipe 563, and the second pipe 563 may be connected to the first pipe 562. The first pipe 562 and second pipe 563 may provide a flow path for water provided by the third pipe 564. The nozzle 561 may be connected to the first pipe 562, and water flowing through the first pipe 562 may be discharged from the nozzle 561. The nozzle 561 may be arranged in the upward-downward direction. Accordingly, the water outletd from the nozzle 561 may be supplied to the coffee powder received in the dripper module 60 by gravity.

The nozzle 561 may move in the penetrated internal space of the water outlet module housings 51 and 52. To this end, one end of the third pipe 564 may be connected to the outlet of the water pump 565, and one end of the second pipe 563 may be connected to the other end of the third pipe 564 so as to be rotatable axially. One end of the first pipe 562 may be connected to the other end of the second pipe 563 so as to be rotatable axially, and the other end of the first pipe 562 may be connected to the nozzle 561.

The water outlet nozzle moving part 55 may be provided to be movable along a horizontal plane in the penetrated internal space of the water outlet module housings 51 and 52. By moving the water outlet nozzle moving part 55, the water outlet nozzle 56, more precisely the nozzle 561, may move in the internal space. In this case, the movement of the nozzle 561 may be a spiral movement in a horizontal plane. To this end, the water outlet nozzle moving part 55 may be rotatably coupled to the nozzle 561.

The water outlet nozzle moving part 55 may be configured to include a hinge 551, a first arm 552, and a second arm 553.

The hinge 551 may be coupled at a first point of the first ring gear 531 and may rotate in the axial direction at a first point of the first ring gear 531. The first arm 552 may be formed to extend in a predetermined direction from the hinge 551.

The nozzle 561 may be rotatably inserted into the sleeve 5521 formed in the first arm 552. The second arm 553 may be formed to extend in a direction opposite to the first arm 552 with the hinge 551 as the center. A pinion gear 5531 may be formed on the other end of the second arm 553, and the pinion gear 5531 may engage with the internal gear 5413 of the second ring gear 541.

The first actuator 53 and second actuator 54 are components installed to rotate, that is, revolve and self-rotate the water outlet nozzle moving part 55 in the internal space. The water outlet nozzle 56, that is, the nozzle 561, may move spirally according to the revolution and rotation of the water outlet nozzle moving part 55.

As mentioned above, the first actuator 53 may be configured to include the first ring gear 531, the first idler gear 532, the first driving gear 533, and the first motor 534. The second actuator 54 may be configured to include the second ring gear 541, the second idler gear 542, the second driving gear 543, and the second motor 544.

The first and second ring gears 531 and 541 may be arranged to be stacked in the above-mentioned internal space and may rotate (revolve) about the central axis of the above-mentioned internal space. To this end, a first external gear 5311 may be formed on the outer surface of the first ring gear 531, and a second external gear 5411 may be formed on the outer surface of the second ring gear 541. A hinge coupling part 5312 that couples the hinge 551 may be formed at a first point on the inner surface of the first ring gear 531.

The first idler gear 532 may be engaged with each of the first external gear 5311 and first driving gear 533. The second idler gear 542 may be engaged with each of the second external gear 5411 and second driving gear 543.

The first driving gear 533 may be coupled to the drive shaft of the first motor 534. The first motor 534 may provide power to rotate the first ring gear 531. The second driving gear 543 may be coupled to the drive shaft of the second motor 544. The second motor 544 may provide power to rotate the second ring gear 541.

The operation of the water outlet nozzle moving part 55 to move the water outlet nozzle 56 in a spiral manner is explained as follows.

The drive shaft of the first motor 534 may be driven at a first number of rotations. The power generated by the first motor 534 may be transmitted to the first external gear 5311 through the first driving gear 533 and first idler gear 532, and thus the first ring gear 531 may rotate (revolve) in the above-mentioned internal space.

In addition, the drive shaft of the second motor 544 may be driven at a second number of rotations. The power generated by the second motor 544 may be transmitted to the second external gear 5411 through the second driving gear 543 and second idler gear 542, and thus the second ring gear 541 may rotate (revolve) in the above-mentioned internal space. In this case, the rotation direction of the first ring gear 531 and rotation direction of the second ring gear 541 may be the same, and the first rotation speed and second rotation speed may be different.

In addition, as the second ring gear 541 rotates, the internal gear 5413 may also rotate in the same direction as the rotation direction of the second ring gear 541. As the internal gear 5413 and pinion gear 5531 engage, the second arm 553 may rotate around the hinge 551.

Ultimately, the water outlet nozzle moving part 55 may rotate around the first point of the first ring gear 531 based on a difference in rotation speed between the first ring gear 531 and the second ring gear 541. Accordingly, the nozzle 561 coupled to the water outlet nozzle moving part 55 may move spirally based on the revolution and rotation of the water outlet nozzle moving part 55.

Referring again to FIGS. 1 to 5, the dripper module 60 may be disposed below each of the grinder module 40 and water outlet module 50. The dripper module 60 may receive the coffee powder that has been provided from the grinder module 40 and has passed through the water outlet module 50, and may receive the water provided from the water outlet module 50, and may extract coffee from the water and coffee powder.

The coffee powder and water may be supplied to the receiving space of the dripper module 60 through the inlet of the dripper module 60. The outlet of the dripper module 60 is formed on the lower side of the dripper module 60, and the extracted coffee may be supplied to the coffee server 70. The outlet of the dripper module 60 may be open or closed.

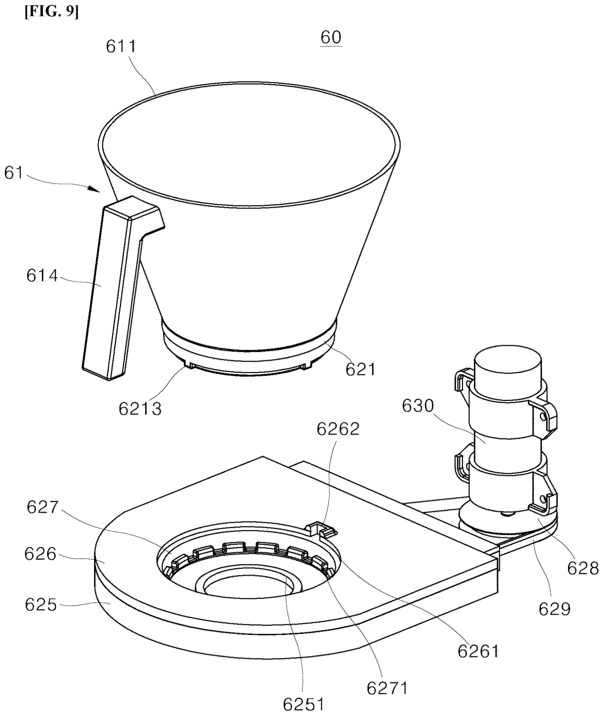

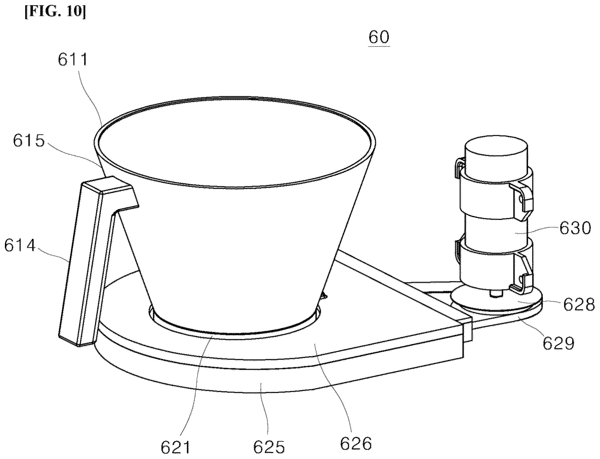

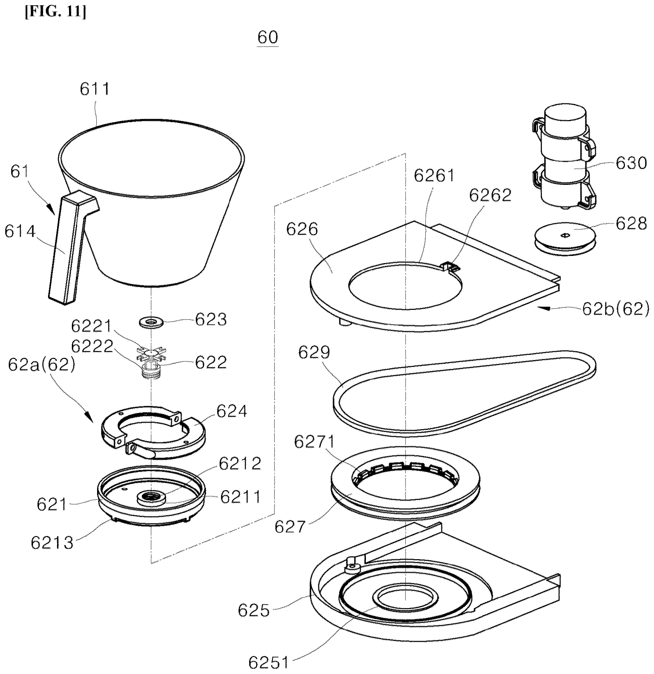

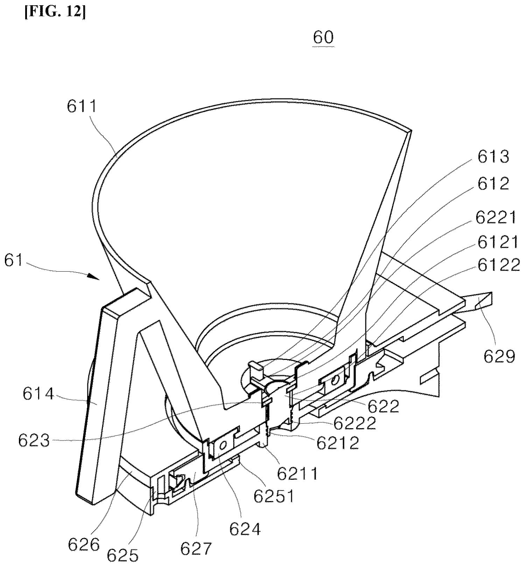

FIG. 9 is a diagram illustrating a perspective view in which the first part of the dripper module 60 is detached from the second part of the dripper module 60, according to an embodiment of the disclosure. FIG. 10 is a diagram illustrating a perspective view in which the first part of the dripper module 60 is mounted on the second part of the dripper module 60, according to an embodiment of the disclosure. FIG. 11 is a diagram illustrating an exploded perspective view of the dripper module 60 according to an embodiment of the disclosure. FIG. 12 is a diagram illustrating a cross-sectional perspective view of FIG. 10.

Referring to FIGS. 4, 5, and 9 to 12, the dripper module 60 may be configured to include a dripper 61 and a dripper valve module 62.

The dripper 61 may receive the coffee powder provided from the grinder module 40 and may receive the water provided from the water outlet module 50. A filter (not shown) may be installed on the inner surface of the dripper 61. The dripper 61 may include an open inlet of the dripper 61 formed on the upper side, and an outlet of the dripper 61 formed on the lower surface, that is, an extraction hole 612. The dripper 61 may have an overall shape corresponding to the shape of the upper side of the funnel. A handle 614 that may be held by the user's hand may be formed on the outer surface of the dripper 61.

When the coffee maker 1 performs the operation of extracting coffee, the dripper 61 may be fixed and not rotate.

The extraction hole 612 may include a first extraction hole 6121 formed on the upper side of the extraction hole 612 and a second extraction hole 6122 formed on the lower side of the extraction hole 612. The first extraction hole 6121 may have an overall cylindrical shape. Meanwhile, according to another embodiment, the first extraction hole 6121 may have a shape corresponding to the shape of the upper side of the funnel.

A plurality of guide protrusions 613 may be formed on the inner surface of the first extraction hole 6121. The guide protrusion 613 may be coupled to the guide member 6221 formed on the upper side of the dripper cap 622 to support the movement in the upward-downward direction of the dripper cap 622.

The dripper valve module 62 may perform an operation to open or close the extraction hole 612. When the extraction hole 612 is opened, the dripper valve module 62 may adjust the opening degree of the extraction hole 612.

The dripper valve module 62 may include a first dripper valve module 62a and a second dripper valve module 62b. The first dripper valve module 62a may be coupled to the dripper 61 below the dripper 61. The second dripper valve module 62b may be connected to the case module 10. The dripper 61 (i.e., first part of the dripper module 60) coupled with the first dripper valve module 62a may be detachably coupled with the second dripper valve module 62b (i.e., second part of the dripper module 60).

The first dripper valve module 62a may include a dripper base 621, a dripper cap 622, a dripper sealer 623, and a dripper wing 624. The second dripper valve module 62b may include dripper supports 625 and 626, a first pulley 627, a second pulley 628, a belt 629, and a third motor 630.

The dripper base 621 may be coupled to the lower surface (i.e., bottom surface) of the dripper 61. As will be described later, the dripper base 621 may rotate about the central axis of the dripper 61 by the second dripper valve module 62b, so the dripper base 621 may be coupled to the lower surface of the dripper 61 so that it may rotate axially.

A connection hole 6211 may be formed in the dripper base 621. The connection hole 6211 may be formed through the dripper base 621 to communicate with the extraction hole 612. The coffee extracted from the dripper 61 may be provided to the coffee server 70 through the extraction hole 612 and connection hole 6211 that are in communication with each other.

A first screw 6212 may be formed on the inner surface of the connection hole 6211. As will be described later, the first screw 6212 may engage with the second screw 6222 formed on the lower side of the outer surface of the dripper cap 622.

A plurality of first coupling members 6213 may be formed on the outer surface of the dripper base 621. The first coupling member 6213 may be formed on the dripper base 621 to couple the dripper base 621 to the first pulley 627.

The first coupling member 6213 may be alternately coupled to the plurality of second coupling members 6271 formed on the inner surface of the first pulley 627. That is, in particular, a gap (cap) may be formed between two adjacent second coupling members 6271, and the first coupling member 6213 may pass through the cap. In this case, the dripper 61 may move a small amount in the axial direction, and the first coupling member 6213 may also move a small amount. The upper surface of the first coupling member 6213, which has moved slightly, may contact the lower surface of the second coupling member 6271. Accordingly, the dripper base 621 may be coupled to the first pulley 627 and fixed through contact between the first coupling member 6213 and the second coupling member 6271.

The dripper cap 622 may be provided to open and close the extraction hole 612. The dripper cap 622 may be disposed inside the extraction hole 612 and connection hole 6211. The upper side of the dripper cap 622 may be coupled to the extraction hole 612. The dripper cap 622 may move in the upward-downward direction inside the extraction hole 612, and thus the extraction hole 612 may be opened and closed. In this case, since the dripper 61 does not rotate axially, the dripper cap 622 coupled with the extraction hole 612 may also not rotate axially. That is, the dripper cap 622 may only move in the upward-downward direction without rotating in the axial direction.

A plurality of guide members 6221 may be formed at the upper end of the dripper cap 622. A guide hole 6221a may be formed at the outer end of the guide member 6221. The guide protrusion 613 may be inserted into the guide hole 6221a. By inserting the guide protrusion 613 into the guide hole 6221a, the upward-downward movement of the dripper cap 622 within the extraction hole 612 may be stably supported.

The dripper sealer 623 may be provided to prevent coffee from leaking into the extraction hole 612 (i.e., the second extraction hole 6122) when the extraction hole 612 is closed. The dripper sealer 623 may be disposed below the guide member 6221.

The dripper wing 624 may be installed on the dripper base 621 to support the axial rotation of the dripper base 621. For example, the dripper wing 624 may be screwed to the dripper base 621. It may perform a similar function to the bearing that is the dripper wing 624.

The dripper supports 625 and 626 may support the first part of the dripper module 60 and provide a space where the first pulley 627 is installed. The dripper supports 625 and 626 may be configured to include a first dripper support 625 and a second dripper support 626 disposed in a stacked manner.

A first through hole 6251 communicating with the connection hole 6211 of the dripper base 621 may be formed in the first dripper support 625. A second through hole 6261 for inserting the dripper base 621 may be formed in the second dripper support 626. Therefore, the dripper base 621 coupled to the dripper 61 through the second through hole 6261 is inserted into the dripper supports 625 and 626, and the coffee extracted from the connection hole 6211 of the dripper base 621 may be provided to the coffee server 70 through the first through hole 6251.

A fixing hole 6262 may be formed in the second dripper support 626. The fixing protrusion (not shown) may be formed on the outer surface of the dripper 61, and the fixing protrusion may be inserted into the fixing hole 6262. By inserting the fixing protrusion in the fixing hole 6262, the dripper 61 does not rotate axially, and only the dripper base 621 may rotate axially.

The first pulley 627 may be disposed inside the dripper supports 625 and 626. The dripper base 621 may be coupled to the inside of the first pulley 627. The outer surface of the first pulley 627 may contact a portion of the belt 629.

The second pulley 628 may be disposed outside the dripper supports 625 and 626. A hole may be formed in the center of the second pulley 628 for coupling to the drive shaft of the third motor 630. The outer surface of the second pulley 628 may be in contact with another portion of the belt 629. The second pulley 628 may perform the function of transmitting the driving force of the third motor 630 to the first pulley 627.

The belt 629 may be connected between the first pulley 627 and the second pulley 628. The belt 629 may transmit movement resulting from rotation of the second pulley 628 to the first pulley 627. The third motor 630 may provide power to rotate the dripper base 621.

The operation of the dripper valve module 62 to open and close the extraction hole 612 of the dripper 61 is described as follows. As the drive shaft of the third motor 630 rotates in one direction, the second pulley 628 may axially rotate in one direction, and the first pulley 627 may rotate in one direction by the belt 629. Accordingly, the dripper base 621 fixedly coupled to the first pulley 627 may also rotate in one direction.

In this case, the dripper 61 is fixed to the second dripper support 626 and may not rotate axially, and only the dripper base 621 may rotate axially in one direction. As the dripper base 621 axially rotates in one direction, the connection hole 6211 and first screw 6212 may rotate in one direction.

Meanwhile, the guide protrusion 613 of the first extraction hole 6121 may be coupled to the guide member 6221 of the dripper cap 622. In this case, since the dripper 61 does not rotate axially, the dripper cap 622 may also not rotate axially. Accordingly, due to rotation of the first screw 6212 in one direction, the second screw 6222 of the dripper cap 622 may be unscrewed from the first screw 6212. The unscrewed second screw 6222 moves linearly upward, and thus the dripper cap 622 itself may move linearly upward inside the extraction hole 612. As the dripper cap 622 moves linearly upward, an open space may be created inside the extraction hole 612. Accordingly, the extraction hole 612 may be opened.

Thereafter, as the drive shaft of the third motor 630 rotates in the other direction, the second pulley 628 axially rotates in the other direction, and the first pulley 627 may rotate in the other direction by the belt 629. Accordingly, the dripper base 621 coupled to the first pulley 627 may also rotate in the other direction.

As the dripper base 621 axially rotates in the other direction, the connection hole 6211 may axially rotate in the other direction, and accordingly, the first screw 6212 formed in the connection hole 6211 may rotate in the other direction. Accordingly, the second screw 6222 of the dripper cap 622 may be screwed to the first screw 6212 due to rotation of the second screw 6222 in the other direction. The screwed second screw 6222 may move linearly downward, and thus the dripper cap 622 itself may move linearly downward inside the extraction hole 612. As the dripper cap 622 moves linearly downward, the upper side of the dripper cap 622 may come into close contact with the first extraction hole 6121. Accordingly, the extraction hole 612 may be closed.

The coffee server 70 is detachable from the case module 10, and the user may drink coffee by placing the coffee received in the coffee server 70 in a coffee container.

The circuit board 80 may be a component for controlling the coffee extraction operation of the dripper module 60, the water supply operation of the water outlet module 50, and the heating operation of the water tank module 20.

There may be a plurality of circuit boards 80. The plurality of circuit boards 80 may include a main circuit board that controls the overall process of the coffee maker 1, an inverter circuit board that controls the heating operation of the water tank module 20, an EMI circuit board that removes electrical noise, a SMPS circuit board that changes AC power to DC power, a motor circuit board that controls the motors of the grinder module 40, water outlet module 50, and dripper module 60, a blowing fan circuit board that controls the blowing fan 90, etc.

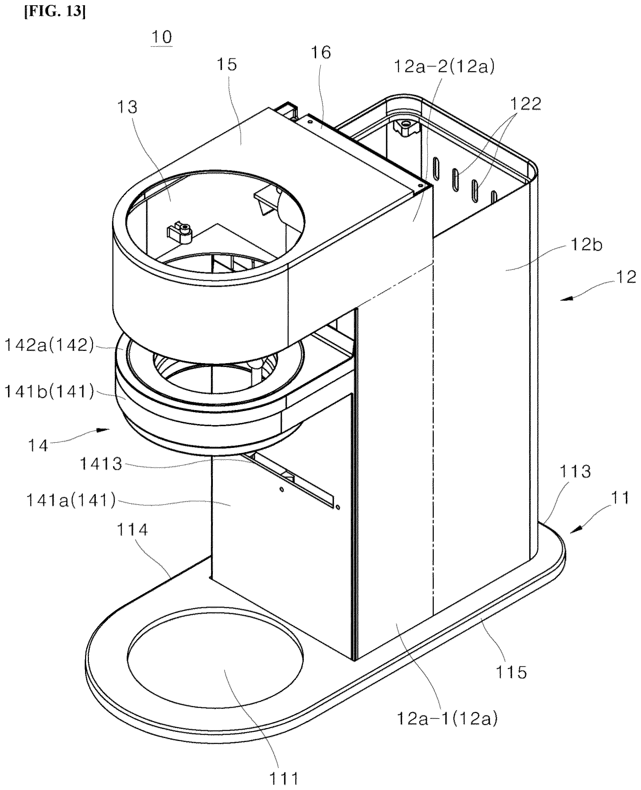

Hereinafter, with reference to FIG. 13 and the like, the structure of the case module 10 will be described in more detail.

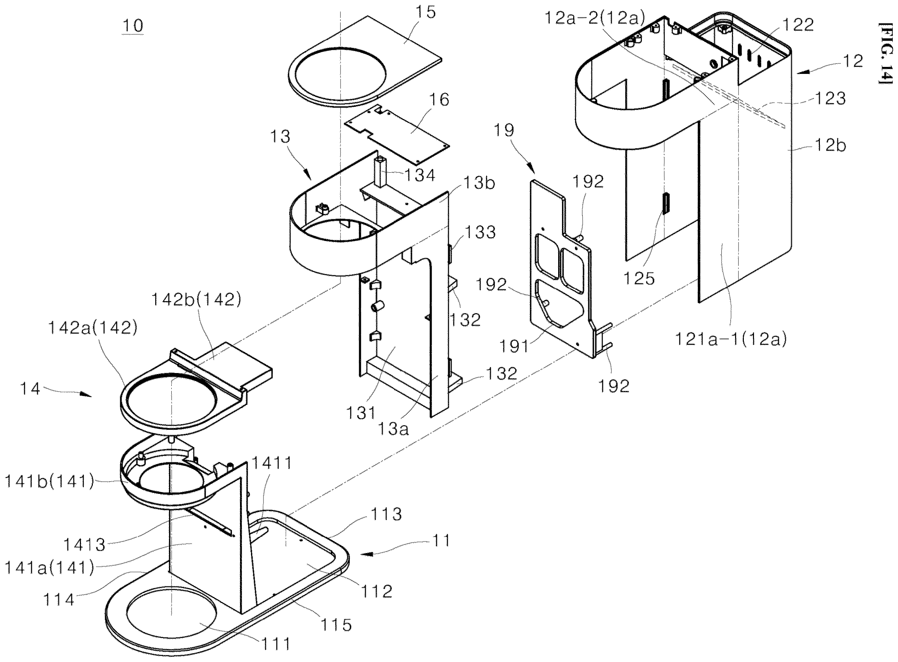

FIG. 13 is a diagram illustrating a perspective view of the case module 10 according to an embodiment of the disclosure. FIG. 14 is a diagram illustrating an exploded perspective view of the case module 10 according to an embodiment of the disclosure. In this case, for convenience of explanation, the first cover 17 and second cover 18 are omitted from FIGS. 13 and 14.

As previously mentioned, the case module 10 may include a body case and the base case 11. The body case may include the outer case 12, the inner case 13, the front case 14, the first upper case 15, the second upper case 16, and the circuit board support 19.

The base case 11 may have an overall square shape, but the front side of the base case 11 may have a semicircular shape. The base case 11 may support the case body and coffee server 70 at the bottom. To this end, the base case 11 may include the first installation groove 111 and second installation groove 112 that are concavely formed.

The first installation groove 111 may be formed on the front side of the base case 11 and may support the coffee server 70. The shape of the first installation groove 111 may correspond to the shape of the bottom surface of the coffee server 70. For example, since the bottom surface of the coffee server 70 is circular, the shape of the first installation groove 111 may be circular.

The second installation groove 112 may be formed on the rear side of the base case 11 and may support the body case. The shape of the second installation groove 112 may correspond to the shape of the bottom surface of the body case. For example, since the bottom surface of the body case has an open square shape, the shape of the second installation groove 112 may be square.

The rear end 113, left end 114, and right end 115 of the base case 11 may be formed to be spaced apart from the body case by a predetermined distance. Accordingly, the rear end 113 of the base case 11 may be formed to protrude backward from the rear surface of the body case, and the left end 114 of the base case 11 may protrude to the leftward from the left surface of the body case. The right end 115 of the base case 11 may be formed to protrude to the rightward from the right surface of the body case.

The outer case 12 may configure the actual appearance of the coffee maker 1. The outer case 12 may have an overall shape extending in the upward-downward direction. The interior of the outer case 12 may be empty.

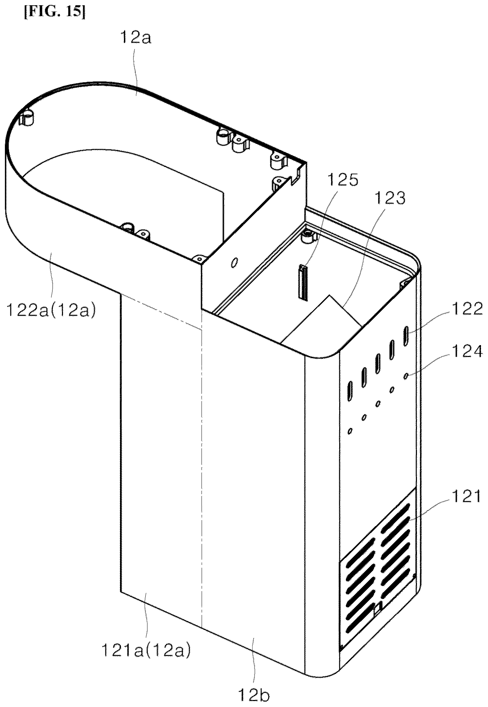

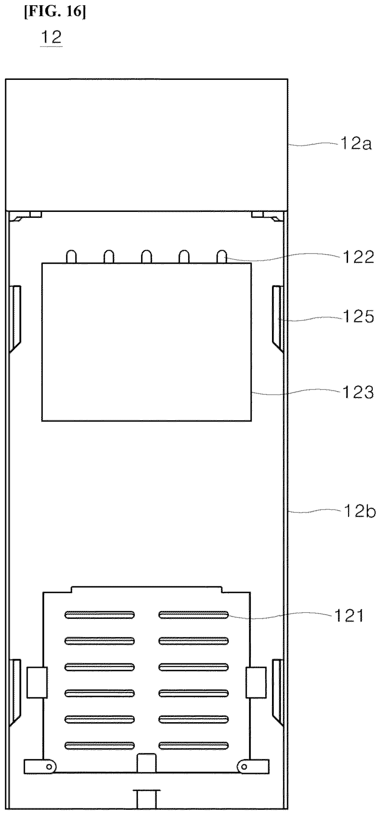

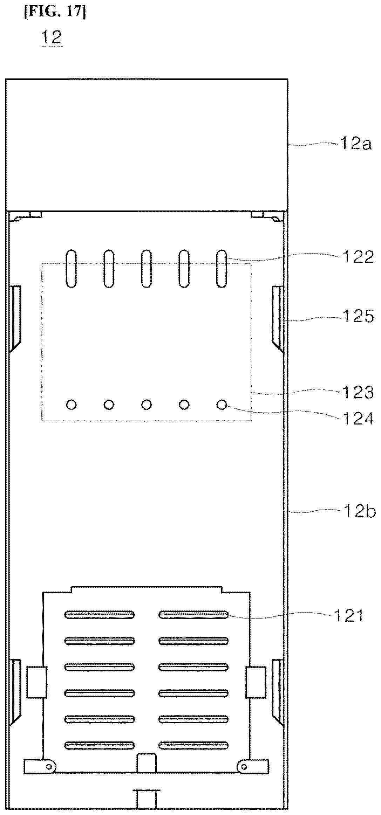

FIG. 15 is a diagram illustrating a perspective view of the outer case 12 viewed from another direction, according to an embodiment of the disclosure. FIG. 16 is a diagram illustrating a front view of the outer case 12 according to an embodiment of the disclosure. FIG. 17 is a diagram illustrating a rear view of the outer case 12 according to an embodiment of the disclosure.

Referring to FIGS. 4, 5, and 13 to 17, the outer case 12 may include a first outer case 12a and a second outer case 12b.

The first outer case 12a may constitute the front side of the outer case 12. The first internal space 126 and third internal space 128 may be formed inside the first outer case 12a.

The first outer case 12a may include a first-1 outer case 12a-1 and a first-2 outer case 12b-1.

The first-1 outer case 12a-1 may have a shape extending in the upward-downward direction. For example, the first-1 outer case 12a-1 may have a square pillar shape. The front, rear, upper, and lower sides of the first-1 outer case 12a-1 may be open. A portion of the inner case 13 and front case 14 may be disposed inside the first-1 outer case 12a-1.

The first internal space 126 may be formed inside the first-1 outer case 12a-1. The first part of the water outlet module 50 and first part of the dripper module 60 may be installed in the first internal space 126.

The first-2 outer case 12b-1 may be located above the first-1 outer case 12a-1. The first-2 outer case 12b-1 may have a shape that protrudes forward with respect to the first-1 outer case 12a-1. The upper and lower surfaces of the first-2 outer case 12b-1 may be open. A portion of the upper surface of the first-2 outer case 12b-1 may be covered by the first upper case 15 and second upper case 16. The remaining portions of the inner case 13 may be disposed inside the first-2 outer case 12b-1.

The third internal space 128 may be formed inside the first-2 outer case 12b-1. The hopper 30 and grinder module 40 may be installed in the third internal space 128.

The second outer case 12b may be located behind the first outer case 12a and may have a shape extending in the upward-downward direction. For example, the second outer case 12b may have a square pillar shape. The front, upper, and lower surfaces of the second outer case 12b may be open.

The second internal space 127 may be formed inside the second outer case 12b. The circuit board support 19, circuit board 80, and blowing fan 90 may be installed in the second internal space 127. The height of the second outer case 12b may be lower than the height of the first outer case 12a, and the water tank module 20 may be disposed above the second outer case 12b.

The suction hole 121, discharge hole 122, and drain hole 124 may be formed on the rear side of the second outer case 12b.

There may be a plurality of suction holes 121. The suction hole 121 may be formed in the lower portion of the rear surface of the second outer case 12b, and may introduce external air for cooling the circuit board 80 installed in the second internal space 127. The blowing fan 90 may be disposed adjacent to the suction hole 121. The blowing fan 90 may supply the introduced air to the second internal space 127.

There may be a plurality of discharge holes 122. The discharge hole 122 may be formed in the upper portion of the rear surface of the second outer case 12b, and may discharge air in the second internal space 127 to the outside. The discharge hole 122 may be formed below the heating module 23 of the water tank module 20.

The air guide 123 may be formed on the rear surface of the second outer case 12b. The air guide 123 may guide the movement of introduced air. That is, the air guide 123 may be disposed in the second internal space 127 to facilitate the discharge of the air that flows into the suction hole 121 and cools the circuit board 80 to the discharge hole 122.

One end of the air guide 123 may be coupled at the first point on the rear surface of the second outer case 12b. The first point may be a point between the formation point of the suction hole 121 and the formation point of the discharge hole 122. The other end of the air guide 123, which is opposite to one end of the air guide 123, may be located at a higher point than one end of the air guide 123. Accordingly, the air guide 123 may be disposed to be inclined in the second internal space 127.

There may be a plurality of drain holes 124. The drain hole 124 may be formed at the second point between the formation point of the suction hole 121 and the formation point of the discharge hole 122. In particular, referring to FIG. 4, the second point may be a point located above the first point. The drain hole 124 may be formed to discharge foreign substances such as water located at the top of the air guide 123 to the outside. In addition, the drain hole 124, together with the discharge hole 122, may discharge the air in the second internal space 127 to the outside.

A plurality of, for example, four third coupling members 125 may be formed at the boundary point between the first outer case 12a and the second outer case 12b. The third coupling member 125 may be formed to protrude from the inner surface of the outer case 12. The third coupling member 125 may be coupled to the fourth coupling member 133 of the inner case 13, which will be described later.

Referring again to FIGS. 13 and 14 , the inner case 13 may be disposed inside the front side of the outer case 12. That is, the inner case 13 may be inserted and disposed inside the first outer case 12a. The inner case 13 may have a shape corresponding to the first outer case 12a. The inner case 13 may separate the internal spaces 126, 127, and 128 of the outer case 12 into the first internal space 126, second internal space 127, and third internal space 128. In addition, the inner case 13 may support the circuit board support 19, hopper 30, and grinder module 40.

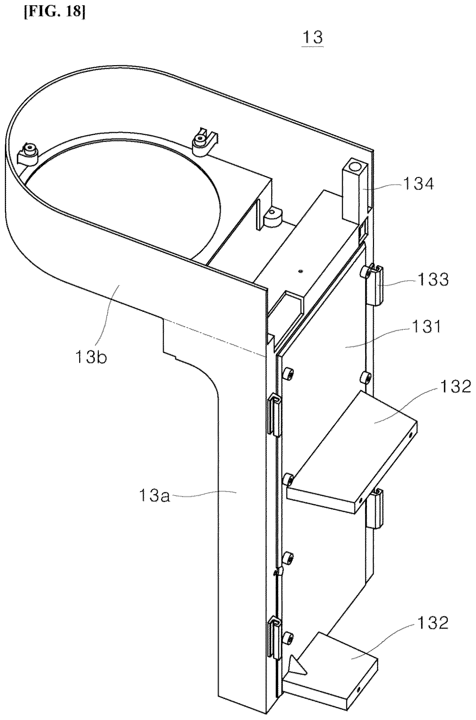

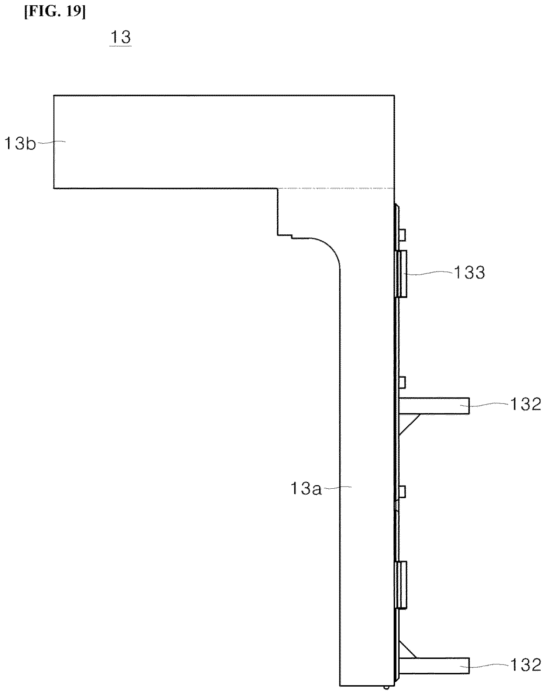

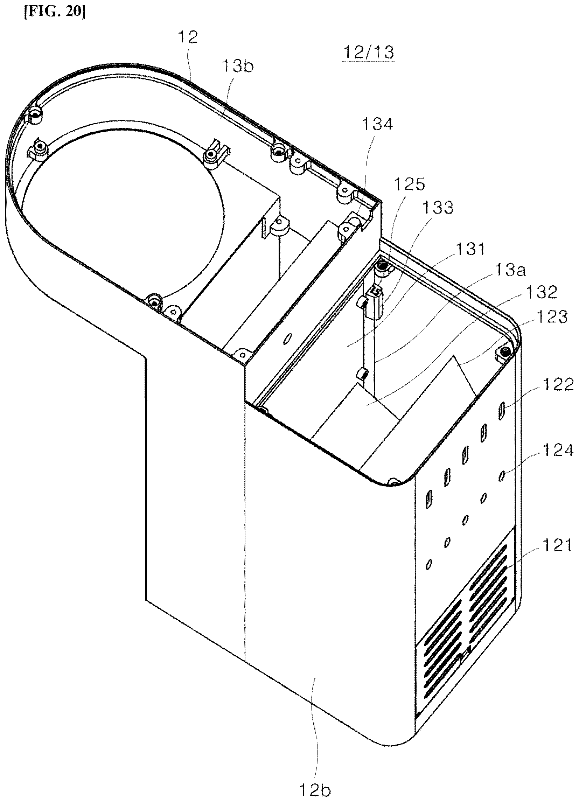

FIG. 18 is a diagram illustrating a perspective view of the inner case 13 viewed from another direction, according to an embodiment of the present invention. FIG. 19 is a diagram illustrating a side view of the inner case 13 according to an embodiment of the present invention. FIG. 20 is a diagram illustrating a perspective view in which the outer case 12 and inner case 13 are coupled, according to an embodiment of the present invention.

Referring to FIGS. 3 to 5, 13, 14, and 18 to 20, the inner case 13 may include a first inner case 13a and a second inner case 13b.

The first inner case 13a may be formed to extend in upward-downward direction in the first internal space 126 and second internal space 127. Overall, the first inner case 13a may be disposed inside the first-1 outer case 12a-1.

The rear surface of the first inner case 13a may be blocked. The blocked rear surface of the first inner case 13a may form the internal partition wall 131. Among the internal spaces 126, 127, and 128 of the outer case 12, the first internal space 126 and second internal space 127 may be separated by the internal partition 131. In particular, the second internal space 127 may be defined by the internal partition wall 131 of the inner case 13 and the interior of the second outer case 12b.

At least one connection member 132 may be formed on the rear surface of the first inner case 13a in the direction of the second internal space 127. As an example, two connecting members 132 may be formed on the middle and lower sides of the rear surface of the first inner case 13a. The connection member 132 may perform the function of connecting and supporting the circuit board support 19 at the same time. The connection member 132 and circuit board supporter 19 may be coupled with screws or the like.

A plurality of, for example, four fourth coupling members 133 may be formed on the rear surface of the first inner case 13a. The plurality of fourth coupling members 133 may be formed to protrude from the edge of the rear surface of the first inner case 13a. In particular, referring to FIG. 20, each of the plurality of fourth coupling members 133 may be coupled to the corresponding third coupling member 125. Accordingly, the inner case 13 may be stably fixed without being detached from the outer case 12.

The second inner case 13b may be located above the first inner case 13a. The second inner case 13b may have a shape that protrudes forward with respect to the first inner case 13a. The second inner case 13b may be disposed inside the first-2 outer case 12b-1.

The upper surface of the second inner case 13b may be open, and a structure for supporting the grinder module 40 below may be formed on the lower surface of the second inner case 13b. The rear surface of the second inner case 13b may be open, and the water outlet pipe 24 of the water tank module 20 may be located at the rear side of the second inner case 13b. In this case, the rear surface of the first inner case 13a and the rear surface of the second inner case 13b may be disposed on the same plane.

The connection pipe 134 may be formed on the rear side of the second inner case 13b. One end of the connection pipe 134 may be connected to the water outlet part 24 of the water tank module 20, and the other end of the connection pipe 134 may be in communication with the first inner case 13a. Accordingly, the water stored in the water tank module 20 may be supplied to the water outlet module 50, that is, the water pump 565, through a first pipe disposed in the interconnected water outlet part 24, connection pipe 134, and first inner case 13a.

Referring again to FIGS. 13 and 14 , the front case 14 may cover a portion of the open front side of the outer case 12 . In addition, the water outlet module 50 and dripper module 60 may be installed in the front case 14. The front case 14 may be disposed in front of the inner case 13, more precisely in front of the first inner case 13a. The first internal space 126 may be defined by the rear side of the front case 14, internal partition wall 131 of the inner case 13, and interior of the first outer case 12a.

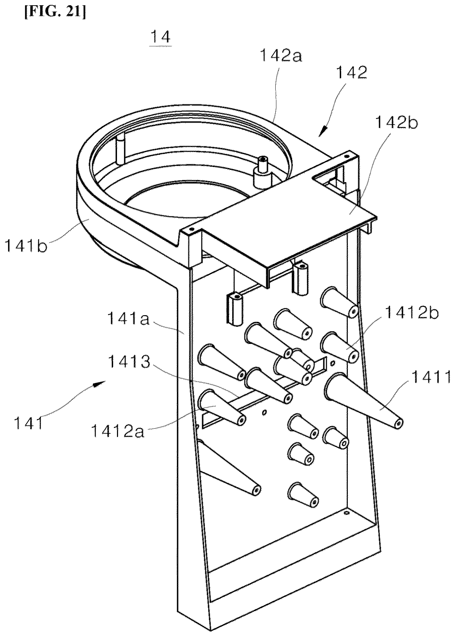

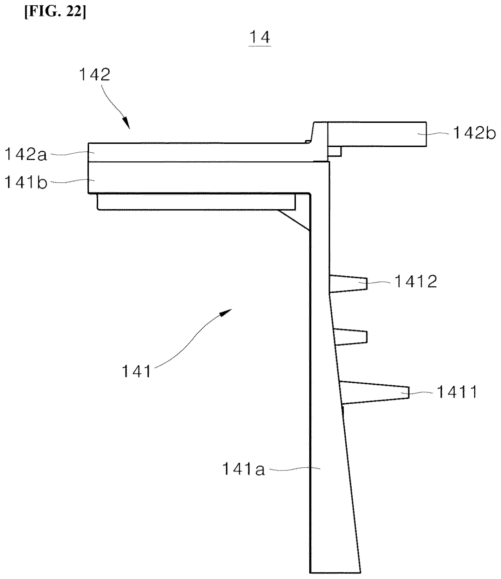

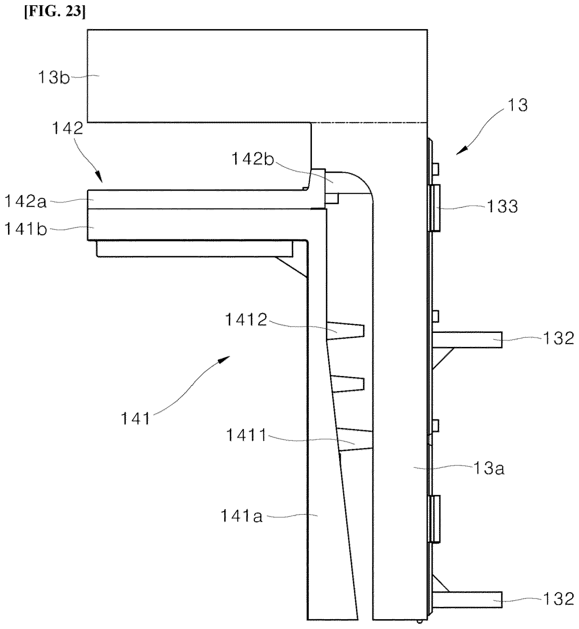

FIG. 21 is a diagram illustrating a perspective view of the front case 14 viewed from another direction, according to an embodiment of the disclosure. FIG. 22 is a diagram illustrating a side view of the front case 14 according to an embodiment of the disclosure. FIG. 23 is a diagram illustrating a side view of the front case 14 coupled with the inner case 13, according to an embodiment of the present invention.

Referring to FIGS. 3 to 5, 13, 14, and 21 to 23, the front case 14 may include a first front case 141 and a second front case 142.

The first front case 141 may include a first-1 front case 141a and a first-2 front case 141b.

The first-1 front case 141a may have a shape extending in the upward-downward direction. The first-1 front case 141a may be inserted and disposed inside the first outer case 12a.

The installation hole 1413 may be formed in the middle of the first-1 front case 141a. For example, the installation hole 1413 may have a square shape. Dripper supports 625 and 626 may be disposed through the installation holes 1413, and the other portion of the belt 629 disposed inside the dripper supports 625 and 626 may be located at the rear side of the first-1 front case 141a.

A support member 1411, fifth coupling member 1412a, and sixth coupling member 1412b may be formed on the rear surface of the first-1 front case 141a. The support member 1411, fifth coupling member 1412a, and sixth coupling member 1412b may be formed to protrude from the rear surface of the first-1 front case 141a in the direction of the first internal space 126.

The support member 1411 may couple the front case 14 and inner case 13 to be spaced apart from each other by a preset first distance. That is, the support member 1411 may couple the first-1 front case 141a and first inner case 13a to be spaced apart by a first distance. The fifth coupling member 1412a may couple a portion of the dripper module 60, that is, the third motor 630, to the first-1 front case 141a and support the third motor 630. The sixth coupling member 1412b may couple a portion of the water outlet module 50, that is, the water pump 565, to the first-1 front case 141a and support the water pump 565. Accordingly, the third motor 630 and water pump 565 may be stably installed in the first internal space 126.

The first-2 front case 141b may be located above the first-1 front case 141a. The first-2 front case 141b may have a shape that protrudes forward with respect to the first-1 front case 141a. The first-2 front case 141b may be disposed entirely in front of the outer case 12. A hole for installing the water outlet module 50 may be formed in the first-2 front case 141b.

The second front case 142 may include a second-1 front case 142a and a second-2 front case 142b.

The second-1 front case 142a may be disposed above the first-2 front case 141b and may be coupled with the first-2 front case 141b. The second-1 front case 142a may be disposed entirely in front of the outer case 12. A hole for installing the water outlet module 50 may be formed in the second-1 front case 142a.

The second-2 front case 142b may be disposed below the second-1 front case 142a. The second-2 front case 142b may be inserted and disposed inside the first outer case 12a. In addition, the second-2 front case 142b may perform a function of supporting the second-1 front case 142a and first inner case 13a to be spaced apart by a first distance.

Hereinafter, the installation structure of the water outlet module 50 and dripper module 60 according to the front case 14 will be described with reference to FIGS. 4 and 5 as follows.

First, the installation structure of the water outlet module 50 will be described as follows. The first ring gear 531, second ring gear 541, portion of the first idler gear 532, portion of the second idler gear 542, water outlet nozzle moving part 55, and portion of the water outlet nozzle 56 may be located in the coupled first-2 front case 141b and second-1 front case 142a. The remaining portions of the first idler gear 532, remaining portions of the second idler gear 542, first driving gear 533, second driving gear 543, first motor 534, and second motor 544 may be located in the first internal space 126 of the outer case 12. In this case, the remaining portions of the first idler gear 532, remaining portions of the second idler gear 542, first driving gear 533, second driving gear 543, first motor 534, and second motor 544 correspond to a portion of the water outlet module 50.

Next, the installation structure of the dripper module 60 will be described as follows. The dripper 61 and first dripper valve module 62a may be located in the front of the outer case 12. Among the second dripper valve modules 62b, the front sides of the dripper supports 625 and 626, first pulley 627, and portion of the belt 629 may be located in front of the outer case 12. Among the second dripper valve modules 62b, the second pulley 628, other part of the belt 629, and third motor 630 may be located in the first internal space 126 of the outer case 12. In this case, the second pulley 628, other part of the belt 629, and third motor 630 correspond to a portion of the dripper module 60.

Again, referring to FIGS. 13 and 14 , the circuit board supporter 19 may be vertically disposed in the second internal space 127 of the outer case 12. As described above, the circuit board supporter 19 may be coupled to the connection member 132 of the inner case 13 and may be supported by the connection member 132. Accordingly, the circuit board supporter 19 may be disposed to be spaced apart from the rear surface of the inner case 13, that is, the internal partition wall 131, by a preset second distance.

By the internal partition wall 131 and circuit board support 19, the second internal space 127 may be separated into a plurality of internal subspaces. A plurality of circuit boards 80 may be installed in the plurality of internal subspaces.

The plurality of internal subspaces may include at least one first internal subspace defined by the internal partition wall 131, which is the rear surface of the inner case 13, and the front side of the circuit board support 19, and at least one second internal subspace defined by the rear side of the circuit board support 19. In this case, at least one first circuit board among the plurality of circuit boards may be coupled to the internal partition wall 131 in the first internal subspace, and at least one second circuit board among the plurality of circuit boards may be coupled with the rear side of the circuit board supporter 19 in the second internal sub-pace. In addition, the blowing fan 90 may be coupled to the rear side of the circuit board supporter 19. To this end, a seventh coupling member 192 may be formed on the circuit board support 19.

In addition, a plurality of through holes 191 may be formed in the circuit board supporter 19 to allow introduced air to pass through. Air may be delivered to at least one first circuit board disposed in the first internal subspace through the through hole 191.

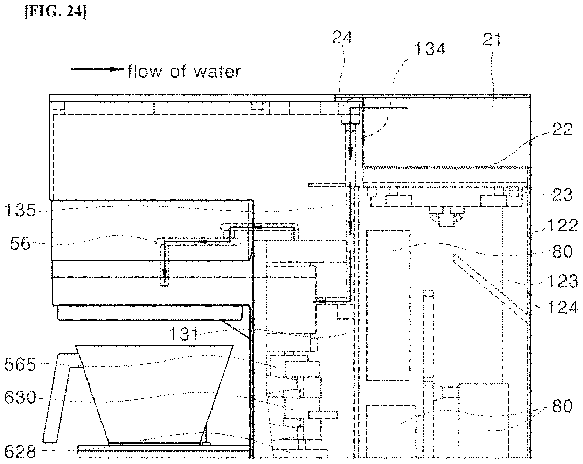

Hereinafter, the waterproof structure and heat dissipation structure of the coffee maker 1 according to an embodiment of the disclosure will be described with further reference to FIGS. 24 to 29.

FIG. 24 is a diagram for explaining the waterproof structure of the coffee maker 1 according to an embodiment of the disclosure. In this case, for convenience of explanation, the grinder module 40 is omitted in FIG. 24.

Referring to FIG. 24, the first inner case 13a may include a closed internal partition wall 131. In this case, the first internal space 126 of the outer case 12 may be defined by the front side of the internal partition wall 131 and the rear side of the front case 14, and the second internal space 127 of the outer case 12 may be defined by the rear side of the internal partition wall 131.

Meanwhile, a portion of the water outlet module 50 may be disposed in the first internal space 126. Here, a portion of the water outlet module 50 may include a first power part that provides power to the water pump 565, portion of the water outlet nozzle 56, and water outlet nozzle moving module that moves the water outlet nozzle 56. The water outlet nozzle moving module may include first and second ring gears 531 and 541 and the water outlet nozzle moving part 55, and the first power part may include first and second idler gears 532 and 542, and first and second motors 534 and 544. In addition, a portion of the dripper module 60 may be disposed in the first internal space 126. Here, a portion of the dripper module 60 may include a second power part that provides power to an extraction hole opening/closing part that opens and closes the extraction hole 612 of the dripper 61. The extraction hole opening/closing part may include the first pulley 627 of the first dripper valve module 62a and second dripper valve module 62b, and the second power part may include the second pulley 628 and third motor 630.

The rear surface of the second inner case 13b may be open, the water outlet part 24 of the water tank module 20 may be disposed inside the rear side of the second inner case 13b, and connected to the connection pipe 134. In this case, the internal partition wall 131 of the first inner case 13a and the rear surface of the second inner case 13b may exist on the same plane.

The water flowing out of the water tank body 21 through the water outlet part 24 may be supplied to the water pump 565 through the connection pipe 134 of the second inner case 13b and the pipe 135 disposed in the first internal space 126. The water pump 565 may discharge water to the nozzle 561 through the first, second, and third pipes 562, 563, and 564.

In short, the first internal space may correspond to a water flow path area through which the water stored in the water tank module 20 is delivered to the water outlet module 50.

In this case, if the connection pipe 134 and pipe 135 are not accurately connected or the pipe 135 is damaged, water may leak. In addition, each of the first, second, and third pipes 562, 563, and 564 is coupled to another pipe, and if each pipe is not correctly coupled or is damaged, water may leak.

In this case, the leaked water only falls into the first internal space 126 due to the internal partition wall 131 and does not fall into the second internal space 127. Accordingly, water does not fall on the circuit board 80 and the circuit board 80 does not come into contact with water. Accordingly, the occurrence of electrical safety accidents can be fundamentally prevented. In addition, since the connection pipe 134 is provided on the front side of the internal partition 131, excess water can be prevented from falling on the circuit board 80.

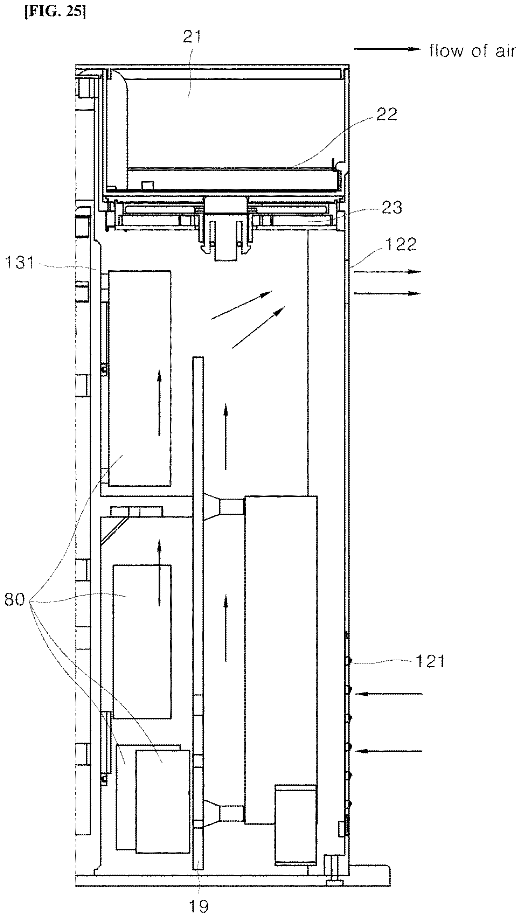

FIGS. 25 to 29 are diagrams for explaining the heat dissipation structure of the coffee maker 1 according to an embodiment of the disclosure.

First, FIG. 25 illustrates the second internal space 127 of the coffee maker 1 without the air guide 123. In this case, for convenience of explanation, the blowing fan 90 is omitted in FIG. 25.

To extract coffee, the heating module 23 of the water tank module 20 may heat water. In this case, the temperature of the rear side of the outer case 12, that is, the temperature of the second internal space 127, may increase due to the heating operation of the heating module 23, and the temperature of the circuit board 80 may increase accordingly. If the temperature of the circuit board 80 exceeds a heat resistance temperature, the coffee maker 1 may break down.

Therefore, in order to cool the circuit board 80, external air may be introduced through the suction hole 121 formed in the lower portion of the rear surface of the outer case 12, and the introduced air may cool the circuit board 80. The Air heated by contact with the circuit board 80 may be discharged through the discharge hole 122. Accordingly, a cooling process of the circuit board 80 may be performed.

In particular, the temperature of the upper portion of the second internal space 127 adjacent to the heating module 23 among the second internal space 127 may increase significantly. That is, the temperature of the upper portion of the second internal space 127 may be higher than the temperature of the lower portion of the second internal space 127. In this case, due to a difference between the upper and lower temperatures of the second internal space 127, the air flowing in from the suction hole 121 naturally flows from the lower portion of the second internal space 127 to the upper portion of the second internal space 127. Accordingly, a natural flow of cooling air may be formed in the second internal space 127.

In addition, when the blowing fan 90 is installed in the second internal space 127, the inflow speed of external air may increase, and forced convection of air may be formed in the second internal space 127. Accordingly, the circuit board 80 may be cooled at a faster rate.

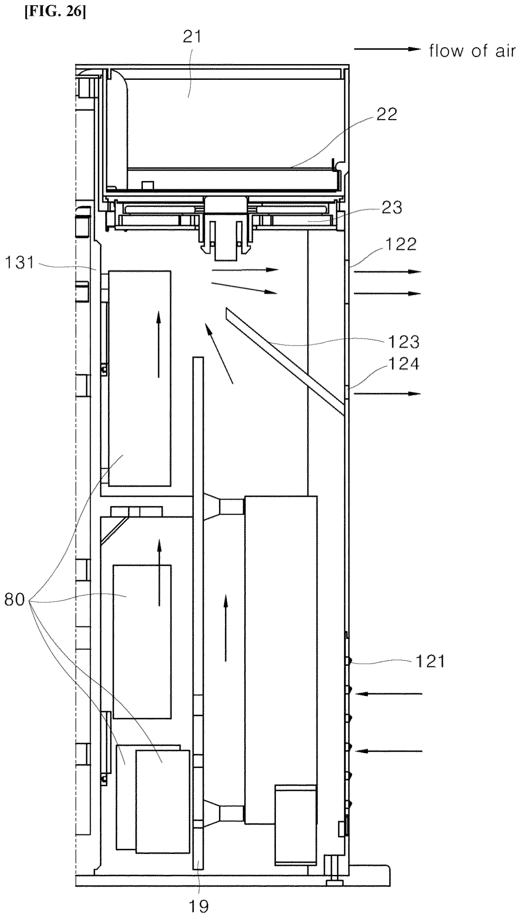

Next, FIG. 26 illustrates the second internal space 127 of the coffee maker 1 equipped with the air guide 123. In this case, for convenience of explanation, the blowing fan 90 is omitted in FIG. 26.

It is preferable that the air flowing into the suction hole 121 comes into contact with all of the circuit board 80. However, air flows along a path with less flow resistance. Accordingly, in the embodiment in FIG. 25, a portion of the circuit board 80 and heating module 23 installed on the upper side of the second internal space 127 may not be in contact with air. In this case, the circuit board 80 and heating module 23 installed on the upper side may not be cooled properly.

To solve this problem, the air guide 123 may be installed in the second internal space 127.

Specifically, the air guide 123 may be installed to slope downward from the upper portion of the second internal space 127. The air flow may be guided to the left side of the second internal space 127 by the air guide 123 installed to be inclined. According to the flow of air induced to the left side, the entire circuit board 80 and heating module 23 installed on the upper side may come into contact with air. Accordingly, the heating module 23 together with all the circuit boards 80 may be cooled together. In addition, since the drain hole 124 discharges more air, cooling performance may be further improved.

Meanwhile, a user may generally install the coffee maker 1 adjacent to a wall. In this case, when the outer case 12 is located adjacent to the wall, external air may not properly flow into the second internal space 127. In this case, there is a problem in that the circuit board 80 cannot be cooled.

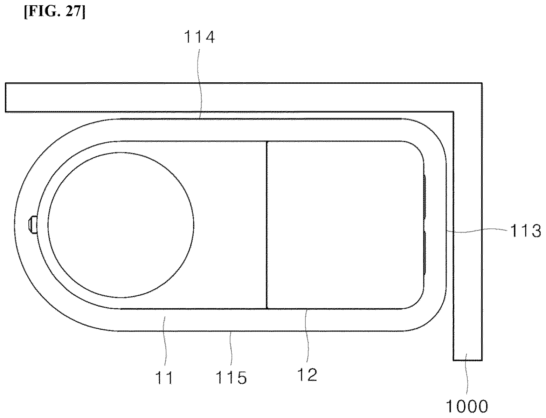

To solve this problem, according to a first embodiment of the disclosure, the base case 11 may be formed so that the size of the base case 11 is larger than the size of the case body. This is as shown in FIG. 27.

Referring to FIG. 27 , the rear end 113, left end 114, and right end 115 of the base case 11 may be formed to be spaced apart from the outer case 12 by a predetermined distance. In other words, the rear end 113 of the base case 11 may be formed to protrude rearward from the rear surface of the outer case 12, the left end 114 of the base case 11 may be formed to protrude leftward from the left side of the outer case 12, and the right end 115 of the base case 11 may be formed to protrude to the rightward from the right surface of the outer case 12. Accordingly, the rear surface of the outer case 12 may be spaced apart from a wall 1000 by a predetermined distance, and external air may be efficiently introduced into the second internal space 127.

Accordingly, external air may be efficiently introduced into the second internal space 127.

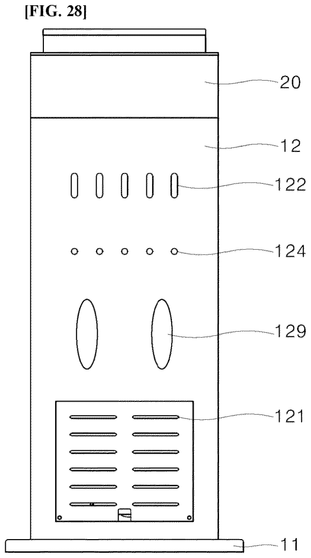

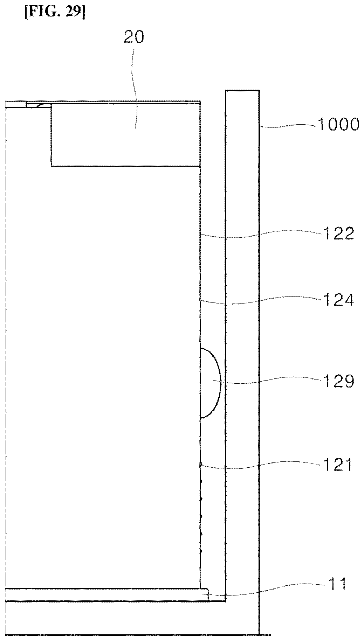

In addition, according to a second embodiment of the disclosure, the protrusion 129 that protrudes out of the outer case 12 may be formed on the rear surface of the outer case 12. This is as shown in FIGS. 28 and 29.

Referring to FIGS. 28 and 29, a plurality of protrusions 129 may be formed, for example, between the suction hole 121 and the drain hole 124. The protrusion 129 may be formed in a convex shape. Accordingly, the rear surface of the outer case 12 may be spaced apart from the wall 1000 by a predetermined distance, and external air may be efficiently introduced into the second internal space 127.

In summary, the coffee maker 1 according to an embodiment of the disclosure may separate the first internal space of the case module 10 where water flows for coffee extraction and the second internal space of the case module 10 where the circuit board is installed by the internal partition wall 131 of the inner case 13. Accordingly, even if water leaks from the first internal space, the leaked water may not flow into the second internal space. Accordingly, water may be prevented from coming into contact with the circuit board 80, and electrical safety accidents may be prevented in advance.

In addition, the coffee maker 1 according to an embodiment of the disclosure may dispose the heating module 23 at the upper portion of the second internal space, form a suction hole 121 for introducing air into the lower portion of the case module 10, and form the discharge hole 122 for discharging air to the upper portion of the case module 10. Accordingly, the air flowing in from the suction hole 121 may naturally move from the lower portion of the second internal space to the upper portion of the second internal space and be discharged. Accordingly, air may flow efficiently, and the cooling performance of the circuit board 80 and heating module 23 may be improved.

In addition, the coffee maker 1 according to an embodiment of the disclosure may be installed with the air guide 123 that guides the flow of air flowing into the second internal space. Accordingly, air may flow in the entire area of the second internal space and be discharged to the discharge hole 122. Accordingly, air may flow in the entire area of the second internal space, and the cooling performance of the circuit board 80 and heating module 23 may be further improved.

As described above, the disclosure has been described with specific details such as specific components and certain embodiments and drawings, but this is only provided to aid the overall understanding of the disclosure, the disclosure is not limited to the above embodiments, and various modifications and variations can be made from this description by those skilled in the art to which the disclosure pertains. Accordingly, the spirit of the disclosure should not be limited to the described embodiments, and the claims described below as well as all modifications that are equivalent or equivalent to the claims will fall within the scope of the disclosure.

## Claims

1. A coffee maker, comprising:
a dripper module that extracts coffee from coffee powder;
a water tank module that stores water and heats the water;
a water outlet module that supplies the stored water to the dripper module;
a circuit board that controls an operation of at least one module of the dripper module, the water outlet module, and the water tank module; and
a case module that includes an outer case and an inner case inserted into the outer case, and provides an installation space for the dripper module, the water outlet module, the water tank module, and the circuit board,
wherein an internal space of the outer case includes a first internal space and a second internal space, the first internal space and the second internal space are separated by the inner case, and
the stored water is delivered from the first internal space to the water outlet module, and the circuit board is disposed in the second internal space.

2. The coffee maker of claim 1, wherein the inner case includes a first inner case extending in an upward-downward direction inside the outer case, and a second inner case protruding from above the first inner case,
the first inner space and the second inner space are separated by the first inner case.

3. The coffee maker of claim 2, wherein the water tank module includes a water tank body that stores the water, and a water outlet part that protrudes from a front side of the water tank body,
the water tank body is disposed above the second internal space and behind the second inner case,
the water outlet part is disposed inside a rear side of the second inner case and connected to the water outlet module through a pipe disposed in the first internal space.

4. The coffee maker of claim 3, wherein a connection pipe is formed at the rear side of the second inner case,
one end of the connection pipe is connected to the water outlet part, and the other end of the connection pipe is connected to the pipe,

5. The coffee maker of claim 2, further comprising a grinder module that grinds coffee bean to produce the coffee powder and provides the coffee powder to the dripper module,
wherein the grinder module is disposed inside the second inner case.

6. The coffee maker of claim 1, wherein the case module further includes a front case that is disposed in front of the inner case and spaced apart by a first preset distance,
the first internal space is defined by a front side of the inner case and a rear side of the front case,
the second internal space is defined by a rear side of the inner case and a lower side of the water tank module.

7. The coffee maker of claim 6, wherein a portion of the dripper module and a portion of the water outlet module are disposed in the first internal space,
a support member and a coupling member are formed on the rear surface of the front case,
the support member couples the front case and the inner case to be spaced apart by the first distance,
the coupling member supports the portion of the dripper module and the portion of the water outlet module in the first internal space.

8. The coffee maker of claim 7, wherein the water outlet module includes a water pump that receives water stored in the water tank module through a first pipe, a water outlet nozzle that supplies the water pumped from the water pump to the coffee powder through a second pipe, a water outlet moving module that moves the water outlet nozzle, and a first power part that provides power to the water outlet nozzle moving module,
the water pump, a portion of the water outlet nozzle, and at least a portion of the first power part correspond to the portion of the water outlet module,
remaining portions of the water outlet nozzle and the water outlet nozzle moving module are accommodated in the front case.

9. The coffee maker of claim 7, wherein the dripper module includes a dripper in which an extraction hole for extracting the coffee is formed on a lower surface, and a dripper valve module that supports the dripper and opens and closes the extraction hole,
the dripper valve module includes a dripper base coupled to the lower surface of the dripper, a dripper support supporting the dripper coupled to the dripper base, an extraction hole opening/closing part disposed on the dripper base to open and close the extraction hole, and a second power part that provides power to the extraction hole opening/closing part,
the second power part corresponds to the portion of the dripper module,
the dripper support is coupled to the front case at a front side of the front case.

10. The coffee maker of claim 1, wherein the outer case includes a first outer case that corresponds to a front side of the outer case and forms the first internal space, and a second outer case that corresponds to a rear side of the outer case and forms the second internal space,
the inner case is disposed inside the first outer case, and the water tank module is disposed above the second outer case.

11. The coffee maker of claim 1, wherein a suction hole is formed in a lower portion of a rear surface of the outer case to introduce external air into the second internal space,
a discharge hole is formed in an upper portion of the rear surface of the outer case to discharge air from the second internal space to an outside,
the water tank module is disposed above the rear side of the outer case,
according to a water heating operation of the water tank module, an upper temperature of the rear side of the outer case increases,
the introduced air moves upward in the second internal space due to a difference between the upper and lower temperatures at the rear side of the outer case.

12. The coffee maker of claim 11, further comprising a blowing fan that is disposed in the second internal space adjacent to the suction hole and supplies the introduced air to the second internal space.

13. The coffee maker of claim 11, wherein the case module further include a circuit board support that is disposed in the second internal space and is for installing the circuit board,
a through hole is formed in the circuit board support to pass the introduced air.

14. The coffee maker of claim 13, wherein the circuit board is plural,
a connecting member is formed on the rear surface of the inner case, and the circuit board support is connected to the connection member and is disposed to be spaced apart from the rear surface of the inner case by a second preset distance,
the second internal space is separated into a plurality of internal subspaces by the connection member and the circuit board support, and the plurality of circuit boards are installed in the plurality of internal subspaces.

15. The coffee maker of claim 14, wherein the plurality of internal subspaces include at least one first internal subspace defined by the rear side of the inner case and the front side of the circuit board support, and at least one second internal subspace defined by the rear side of the circuit board support,
at least one first circuit board among the plurality of circuit boards is coupled to a rear surface of the inner case in the first internal subspace,
at least one second circuit board among the plurality of circuit boards is coupled to the rear side of the circuit board support in the second internal subspace.

16. The coffee maker of claim 11, further comprising an air guide that is disposed to be inclined in the second internal space and guides movement of the introduced air,
wherein one end of the air guide is coupled to the rear surface of the outer case at a first point on the rear surface of the outer case,
the first point is located between the suction hole and the discharge hole,
the other end of the air guide, which is opposite to one end of the air guide, is higher than the one end of the air guide.

17. The coffee maker of claim 16, wherein a drain hole is formed at a second point on the rear surface of the outer case,
the second point is located above the first point.

18. The coffee maker of claim 1, wherein the case module further includes a base case supporting the outer case from below,
a rear end of the base case is formed to protrude rearward from the rear surface of the outer case.

19. The coffee maker of claim 1, wherein on the rear surface of the outer case, a protrusion is formed that protrudes out of the outer case.

20. A coffee maker comprising:
a dripper module that extracts coffee from coffee powder;
a water outlet module that supplies water to the dripper module;
a water tank module that stores the water and heats the water;
a circuit board that controls an operation of at least one module of the dripper module, the water outlet module, and the water tank module; and
a case module that provides an installation space for the dripper module, the water outlet module, the water tank module, and the circuit board,
wherein, an internal space in which the circuit board is installed is formed at a rear side of the case module, the water tank module is disposed above the internal space,
a suction hole is formed in a lower portion of a rear surface of the case module to introduce external air into the internal space, and a discharge hole is formed in an upper portion of the rear surface of the case module to discharge air in the internal space to an outside,
according to a water heating operation of the water tank module, an upper temperature of the internal space is higher than a lower temperature of the internal space, and the introduced air moves upwardly from the internal space due to a difference between the upper and lower temperatures of the internal space.
